# EUROPÄISCHE PATENTANMELDUNG

(11) **EP 1 111 197 A2**
(43) Veröffentlichungstag der Anmeldung: **27.06.2001**
(21) Anmeldenummer: 00126466.2
(22) Anmeldetag: 07.12.2000
(51) Int. Cl.: F01K 23/10

(54) **Verfahren zum Nachrüsten eines Sattdampf erzeugenden Systems mit mindestens einer Dampfturbogruppe sowie nach dem Verfahren nachgerüstete Dampfkraftanlage**

(30) Priorität: 23.12.1999 DE 19962386
(71) Anmelder: ALSTOM Power (Schweiz) AG, 5400 Baden (CH)
(72) Erfinder: Liebig, Erhard, 79725 Laufenburg (DE)

(57) **Zusammenfassung**

Ein Sattdampf erzeugendes System (1) wird mit mindestens einem Gasturbosatz (29, 30, 31, 36), mindestens einem Abhitzekessel (32), mindestens einer Vorschaltdampfturbine (37) und mindestens einem Dampfmischapparat (52) nachgerüstet. Die Vorschaltdampfturbine (37) ist mit dem Gasturbosatz (29, 30, 31, 36) gekoppelt, welche durch den im Abhitzekessel (32) erzeugten Dampf versorgt wird. Der Abdampf der Vorschaltdampfturbine (37) wird über den Dampfmischapparat (52) der Dampfturbogruppe (2) zugeführt.

## Beschreibung

### Technisches Gebiet

Die vorliegende Erfindung betrifft ein Verfahren zum Nachrüsten eines Sattdampf erzeugenden Systems mit mindestens einer Dampfturbogruppe in eine auf hohe Frischdampfparameter ausgelegte Dampfkraftanlage. Sie betrifft ferner eine nach diesem Verfahren nachgerüstete Dampfkraftanlage.

### Stand der Technik

Der Zustand eines Dampferzeugers kann sich insbesondere nach einer längeren Betriebsdauer aus verschiedenen Gründen derart verändern, dass der Dampferzeuger nur noch mit einer verminderten Leistung oder veränderten Parametern weiter betrieben werden kann.

Es ist beispielsweise möglich, dass die Leistung bzw. die Auslegungsparameter eines Dampferzeugers nicht erreicht werden, weil die Heizflächen durch Ablagerungen stark verschmutzt sind.

Speziell in einem Kernkraftwerk altern Bauteile im nuklearen Bereich zusätzlich durch die Strahlenbelastung. Die Kerntechnik unterliegt ferner einer starken politischen Diskussion, wodurch sich die gesetzlichen Rahmenbedingungen ändern können. Eine Folge kann sein, dass nicht mehr die volle Leistungsdichte im Reaktor gefahren werden kann bzw. darf und dadurch die Leistung der Dampferzeugung sinkt, die Flexibilität der Anlage eingeschränkt wird und dergleichen.

Muss nun ein Dampferzeuger mit verminderter Leistung betrieben werden, wird der Wasser-/Dampf-Kreislauf und somit die Dampfturbogruppe des Kraftwerkes nicht mehr ausgelastet, kommt es zu Einschränkungen bezüglich der ursprünglich noch zulässigen Fahrweisen und dergleichen. Damit ergibt sich eine Einbusse bei der erzeugten elektrischen Leistung, also eine finanzielle Einbusse für den Betreiber beispielsweise des Kraftwerkes.

Im Zuge der Nachrüstung von Sattdampf erzeugenden Systemen verminderter Leistung mit Dampfturbogruppen besteht gleichzeitig das Bestreben mit der Nachrüstung eine Modernisierung durch Anhebung der Dampfparameter zu realisieren, um neben der Leistung auch den Wirkungsgrad des gesamten Kraftwerkes, umfassend das Sattdampf erzeugende System und die Dampfturbogruppen, zu erhöhen.

### Darstellung der Erfindung

Der Erfindung liegt somit die Aufgabe zugrunde, ein Verfahren zum Nachrüsten eines Sattdampf erzeugenden Systems mit mindestens einer Dampfturbogruppe zu schaffen, gemäss welchem, unter Beibehaltung der ursprünglichen Anlagentechnik, bei verminderter Leistung des Sattdampf erzeugenden Systems die mindestens eine Dampfturbogruppe weiterhin möglichst voll ausgelastet betrieben werden kann.

Mit dieser Nachrüstung sollte vorteilhafter Weise eine Erhöhung der Leistung aber gleichzeitig auch eine Erhöhung des Wirkungsgrades der gesamten Dampfkraftanlage einhergehen.

Die Erfindung soll sich insbesondere zum Nachrüsten eines nuklearen Sattdampf erzeugenden Systems mit mindestens einer Dampfturbogruppe eignen.

Erfindungsgemäss wird dies in einer ersten Ausführung des Verfahrens erreicht, indem das Sattdampf erzeugende System mit mindestens einem Gasturbosatz, mindestens einem Abhitzekessel, mindestens einer Vorschaltdampfturbine und mindestens einem Dampfmischapparat nachgerüstet wird, das Abgas der mindestens einen Gasturbine des mindestens einen Gasturbosatzes zur Dampferzeugung im mindestens einen Abhitzekessel genutzt wird, der im mindestens einen Abhitzekessel erzeugte Dampf über eine Frischdampfleitung der mindestens einen Vorschaltdampfturbine zugeführt wird und der Abdampf der mindestens einen Vorschaltdampfturbine über eine Abdampfleitung dem mindestens einen Dampfmischapparat zugeführt wird, in welchem mindestens einem Dampfmischapparat vom Sattdampf erzeugenden System stammender Dampf mit von der mindestens einen Vorschaltdampfturbine stammendem Dampf gemischt und das Dampfgemisch der mindestens einen Dampfturbogruppe bereitgestellt wird. Die Abdampfzustände der mindestens einen Vorschaltdampfturbine liegen in den für den Betrieb der mindestens einen Dampfturbogruppe zulässigen Bereichen.

In einer zweiten Ausführung des Verfahrens weist die mindestens eine Dampfturbogruppe eine Sattdampfmitteldruckdampfturbine, einen Separator, einen Zwischenüberhitzer und eine Niederdruckdampfturbine auf und der mindestens eine Abhitzekessel verfügt über einen Zwischenüberhitzer. Der Abdampf der Sattdampfmitteldruckdampfturbine der mindestens einen Dampfturbogruppe wird im Zwischenüberhitzer des mindestens einen Abhitzekessels massenstromseitig mindestens anteilig zwischenüberhitzt und der zwischenüberhitzte Dampf der mindestens einen Dampfturbogruppe bereitgestellt.

In einer dritten Ausführung des Verfahrens weist die mindestens eine Vorschaltdampfturbine einen Hochdruck- und einen Mitteldruckteil auf und der mindestens eine Abhitzekessel verfügt über einen Zwischenüberhitzer. Der Abdampf des Hochdruckteiles der mindestens einen Vorschaltdampfturbine wird im Zwischenüberhitzer des mindestens einen Abhitzekessels zwischenüberhitzt und nach der Zwischenüberhitzung dem Mitteldruckteil der mindestens einen Vorschaltdampfturbine zugeführt. Der Abdampf des Mitteldruckteiles der mindestens einen Vorschaltdampfturbine wird über die Abdampfleitung dem mindestens einen Dampfmischapparat der mindestens einen Dampfturbogruppe zugeführt.

Eine nach einer ersten Ausbildung einer Anlage zur Durchführung des Verfahrens nachgerüstete Dampfkraftanlage, welche Anlage ein Sattdampf erzeugendes System und mindestens eine von diesem System mit Dampf versorgte Dampfturbogruppe aufweist, zeichnet sich aus durch mindestens einen Gasturbosatz, mindestens einen Abhitzekessel, mindestens eine Vorschaltdampfturbine und durch mindestens einen Dampfmischapparat, welcher Dampfmischapparat einlassseitig mit dem Sattdampf erzeugenden System und mit der mindestens einen Vorschaltdampfturbine und auslassseitig mit mindestens einem Teil der Dampfturbogruppe kommuniziert.

Gemäss einer zweiten Ausbildung der Anlage zur Durchführung des Verfahrens, welche Anlage ein Sattdampf erzeugendes System und mindestens eine Dampfturbogruppe aufweist, zeichnet sich dadurch aus, dass der mindestens eine Abhitzekessel einen Zwischenüberhitzer aufweist und die mindestens eine Dampfturbogruppe eine Sattdampfmitteldruckdampfturbine, einen Separator, einen Zwischenüberhitzer und eine Niederdruckdampfturbine aufweist, mindestens ein Dampfmischapparat zwischen dem Sattdampf erzeugenden System und der mindestens einen Dampfturbogruppe angeordnet ist, der einlassseitig mit dem Sattdampf erzeugenden System und der mindestens einen Vorschaltdampfturbine und auslassseitig mit der mindestens einen Dampfturbogruppe kommuniziert, welche Sattdampfmitteldruckdampfturbine über eine kalte Zwischenüberhitzerdampfleitung mit dem Zwischenüberhitzer des mindestens einen Abhitzekessel kommuniziert, von welchem eine heisse Zwischenüberhitzerdampfleitung abgeht, welche zur mindestens einen Niederdruckdampfturbine verläuft.

Gemäss einer dritten Ausbildung der Anlage zur Durchführung des Verfahrens, welche Anlage ein Sattdampf erzeugendes System und mindestens eine Dampfturbogruppe aufweist, zeichnet sich dadurch aus, dass der mindestens eine Abhitzekessel einen Zwischenüberhitzer aufweist und die mindestens eine Vorschaltdampfturbine einen Hochdruckteil und einen Mitteldruckteil aufweist, wobei der Hochdruckteil abdampfseitig über eine kalte Zwischenüberhitzerdampfleitung mit dem Zwischenüberhitzer des mindestens einen Abhitzekessels in Verbindung steht, dessen heisse Zwischenüberhitzerleitung mit dem Mitteldruckteil der mindestens einen Vorschaltdampfturbine in Verbindung steht, dessen Abdampfleitung mit mindestens einem Teil der Dampfturbogruppe kommuniziert.

Nach erfolgter Nachrüstung besteht die Anlage aus mindestens zwei unabhängigen Erzeugereinheiten mit
- unterschiedlichem dynamischen Verhalten
- unterschiedlichen Wirkungsgraden der Energieerzeugung und
- eventuell unterschiedlichen Brennstoffen und Brennstoffpreisen.

Damit ergeben sich weitere Spielräume hinsichtlich der Fahrweise und der Wirtschaftlichkeit der Anlage.

Die Vorteile der Erfindung sind darin zu sehen, dass trotz verminderter Leistung des Sattdampf erzeugenden Systems die vorhandene auf Sattdampfbedingungen ausgelegte Dampfturbogruppe weiterhin voll ausgelastet betrieben sowie die Gesamtleistung und der Gesamtwirkungsgrad des Kraftwerkes erhöht werden kann. Zusätzlich erhöht sich die Flexibilität des Kraftwerkes durch zwei unabhängige Erzeugereinheiten. Speziell für Kernkraftwerke bedeutet dies einen Anlagenerhalt bei minimalen Investitionen.

Weiter ist insbesondere im Falle eines Kernkraftwerkes ein unabhängiger Betrieb vom nuklearen Teil des Kraftwerkes und dem Gasturbinenteil möglich. Zudem ist das Kraftwerk eine erste Stufe eines Umbaus von einem Kernkraftwerk zu einem Kombikraftwerk mit dem Ziel der späteren Stillegung des nuklearen Teils.

### Kurze Beschreibung der Zeichnungen

In den Zeichnungsfiguren sind Ausführungsbeispiele der Erfindung dargestellt.

Es sind nur die für das Verständnis der Erfindung wesentlichen Elemente gezeigt.
Figur 1 zeigt schematisch den Wasser-/Dampf-Kreislauf eines Kernkraftwerkes,
Figur 2 zeigt schematisch eine erste Variante eines nachgerüsteten Kernkraftwerkes mit einer Einwellenanlage und einem Mitteldruckdampfmischapparat,
Figur 3 zeigt schematisch eine erste Variante eines nachgerüsteten Kernkraftwerkes mit einer Einwellenanlage und einem Niederdruckdampfmischapparat,
Figur 4 zeigt schematisch eine erste Variante eines nachgerüsteten Kernkraftwerkes entsprechend Figur 2 mit einer Mehrwellenanlage,
Figur 5 zeigt schematisch eine zweite Variante eines nachgerüsteten Kernkraftwerkes mit anteiliger Zwischenüberhitzung im Abhitzekessel mit einem Dampfabzweigapparat nach dem Separator der Dampfturbogruppe,
Figur 6 zeigt schematisch eine zweite Variante eines nachgerüsteten Kernkraftwerkes mit anteiliger Zwischenüberhitzung im Abhitzekessel mit einem Dampfabzweigapparat vor dem Separator der Dampfturbogruppe,
Figur 7 zeigt schematisch eine zweite Variante eines nachgerüsteten Kernkraftwerkes mit vollständiger Zwischenüberhitzung im Abhitzekessel unter Beibehalt der Separation (Einwellenanlage),
Figur 8 zeigt schematisch eine zweite Variante eines nachgerüsteten Kernkraftwerkes mit vollständiger Zwischenüberhitzung im Abhitzekessel unter Beibehalt der Separation (Mehrwellenanlage),
Figur 9 zeigt schematisch eine zweite Variante eines nachgerüsteten Kernkraftwerkes mit vollständiger Zwischenüberhitzung im Abhitzekessel unter Wegfall der Separation (Einwellenanlage),
Figur 10 zeigt schematisch eine zweite Variante eines nachgerüsteten Kernkraftwerkes mit vollständiger Zwischenüberhitzung im Abhitzekessel unter Wegfall der Separation (Mehrwellenanlage),
Figur 11 zeigt schematisch eine dritte Variante eines nachgerüsteten Kernkraftwerkes mit Zwischenüberhitzung im Abhitzekessel und einer Vorschaltdampfturbine bestehend aus einem Hochdruck- und einem Mitteldruckteil (Einwellenanlage),
Figur 12 zeigt schematisch eine dritte Variante eines nachgerüsteten Kernkraftwerkes mit Zwischenüberhitzung im Abhitzekessel und einer Vorschaltdampfturbine bestehend aus einem Hochdruck- und einem Mitteldruckteil (Mehrwellenanlage),
Figur 13 zeigt eine Ausführung mit drei Gasturbosätzen mit den zugehörigen Abhitzekesseln, den jeweiligen Vorschaltdampfturbinen als Einwellenanlage, der Mitteldruckdampfsammelschiene und einer Dampfturbogruppe (Mitteldruckdampfmischapparat),
Figur 14 zeigt eine Ausführung mit drei Gasturbosätzen mit den zugehörigen Abhitzekesseln, den jeweiligen Vorschaltdampfturbinen als Einwellenanlage, der Mitteldruckdampfsammelschiene und mehreren Dampfturbogruppen (Mitteldruckdampfmischapparat),
Figur 15 zeigt eine Ausführung mit drei Gasturbosätzen mit den zugehörigen Abhitzekesseln, den jeweiligen Vorschaltdampfturbinen als Einwellenanlage, der Mitteldruckdampfsammelschiene und einer Dampfturbogruppe (Niederdruckdampfmischapparat),
Figur 16 zeigt eine Ausführung mit drei Gasturbosätzen mit den zugehörigen Abhitzekesseln, den jeweiligen Vorschaltdampfturbinen als Einwellenanlage, der Mitteldruckdampfsammelschiene und mehreren Dampfturbogruppen (mehrere Niederdruckdampfmischapparate),
Figur 17 zeigt eine Ausführung mit drei Gasturbosätzen mit den zugehörigen Abhitzekesseln, den jeweiligen Vorschaltdampfturbinen als Einwellenanlage, der Mitteldruckdampfsammelschiene und mehreren Dampfturbogruppen (mehrere Mitteldruckdampfmischapparate),
Figur 18 zeigt eine Ausführung mit drei Gasturbosätzen mit den zugehörigen Abhitzekesseln, den jeweiligen Vorschaltdampfturbinen als Mehrwellenanlage, der Mitteldruckdampfsammelschiene und einer Dampfturbogruppe (Mitteldruckdampfmischapparat),
Figur 19 zeigt eine Ausführung mit drei Gasturbosätzen mit den zugehörigen Abhitzekesseln, den jeweiligen Vorschaltdampfturbinen als Mehrwellenanlage, der Mitteldruckdampfsammelschiene und mehreren Dampfturbogruppen (Mitteldruckdampfmischapparat),
Figur 20 zeigt eine Ausführung mit drei Gasturbosätzen mit den zugehörigen Abhitzekesseln, den jeweiligen Vorschaltdampfturbinen als Mehrwellenanlage, der Mitteldruckdampfsammelschiene und einer Dampfturbogruppe (Niederdruckdampfmischapparat),
Figur 21 zeigt eine Ausführung mit drei Gasturbosätzen mit den zugehörigen Abhitzekesseln, den jeweiligen Vorschaltdampfturbinen als Mehrwellenanlage, der Mitteldruckdampfsammelschiene und mehreren Dampfturbogruppen (mehrere Niederdruckdampfmischapparate),
Figur 22 zeigt eine Ausführung mit drei Gasturbosätzen mit den zugehörigen Abhitzekesseln, den jeweiligen Vorschaltdampfturbinen als Mehrwellenanlage, der Mitteldruckdampfsammelschiene und mehreren Dampfturbogruppen (mehrere Mitteldruckdampfmischapparate),
Figur 23 zeigt eine Ausführung mit drei Gasturbosätzen mit den zugehörigen Abhitzekesseln, einer Hochdruckdampfsammelschiene, zwei Vorschaltdampfturbinen als Mehrwellenanlage und einer Dampfturbogruppe (Mitteldruckdampfmischapparat),
Figur 24 zeigt eine Ausführung mit drei Gasturbosätzen mit den zugehörigen Abhitzekesseln, einer Hochdruckdampfsammelschiene, zwei Vorschaltdampfturbinen als Mehrwellenanlage und mehreren Dampfturbogruppen (Mitteldruckdampfmischapparat),
Figur 25 zeigt eine Ausführung mit drei Gasturbosätzen mit den zugehörigen Abhitzekesseln, einer Hochdruckdampfsammelschiene, zwei Vorschaltdampfturbinen als Mehrwellenanlage und einer Dampfturbogruppe (Niederdruckdampfmischapparat),
Figur 26 zeigt eine Ausführung mit drei Gasturbosätzen mit den zugehörigen Abhitzekesseln, einer Hochdruckdampfsammelschiene, zwei Vorschaltdampfturbinen als Mehrwellenanlage und mehreren Dampfturbogruppen (mehrere Niederdruckdampfmischapparate),
Figur 27 zeigt eine Ausführung mit drei Gasturbosätzen mit den zugehörigen Abhitzekesseln, einer Hochdruckdampfsammelschiene, zwei Vorschaltdampfturbinen als Mehrwellenanlage und mehreren Dampfturbogruppen (mehrere Mitteldruckdampfmischapparate),
Figur 28 zeigt eine Ausführung mit drei Gasturbosätzen mit den zugehörigen Abhitzekesseln, einer Hochdruckdampfsammelschiene, einer einzigen Vorschaltdampfturbine als Mehrwellenanlage und einer Dampfturbogruppe (Mitteldruckdampfmischapparat),
Figur 29 zeigt eine Ausführung mit drei Gasturbosätzen mit den zugehörigen Abhitzekesseln, einer Hochdruckdampfsammelschiene, einer einzigen Vorschaltdampfturbine als Mehrwellenanlage und mehreren Dampfturbogruppen (Mitteldruckdampfmischapparat),
Figur 30 zeigt eine Ausführung mit drei Gasturbosätzen mit den zugehörigen Abhitzekesseln, einer Hochdruckdampfsammelschiene, einer einzigen Vorschaltdampfturbine als Mehrwellenanlage und einer Dampfturbogruppe (Niederdruckdampfmischapparat),
Figur 31 zeigt eine Ausführung mit drei Gasturbosätzen mit den zugehörigen Abhitzekesseln, einer Hochdruckdampfsammelschiene, einer einzigen Vorschaltdampfturbine als Mehrwellenanlage und mehreren Dampfturbogruppen (mehrere Niederdruckdampfmischapparate),
Figur 32 zeigt eine Ausführung mit drei Gasturbosätzen mit den zugehörigen Abhitzekesseln, einer Hochdruckdampfsammelschiene, einer einzigen Vorschaltdampfturbine als Mehrwellenanlage und mehreren Dampfturbogruppen (mehrere Mitteldruckdampfmischapparate),
Figur 33 zeigt eine Ausführung mit drei Gasturbosätzen mit den zugehörigen Abhitzekesseln mit Zwischenüberhitzung, den jeweiligen Vorschaltdampfturbinen als Einwellenanlage, kalter und heisser Zwischenüberhitzerdampfsammelschiene und einer Dampfturbogruppe (Mitteldruckdampfmischapparat),
Figur 34 zeigt eine Ausführung mit drei Gasturbosätzen mit den zugehörigen Abhitzekesseln mit Zwischenüberhitzung, den jeweiligen Vorschaltdampfturbinen als Einwellenanlage, kalter und heisser Zwischenüberhitzerdampfsammelschiene und mehreren Dampfturbogruppen (Mitteldruckdampfmischapparat),
Figur 35 zeigt eine Ausführung mit drei Gasturbosätzen mit den zugehörigen Abhitzekesseln mit Zwischenüberhitzung, den jeweiligen Vorschaltdampfturbinen als Einwellenanlage, kalter und heisser Zwischenüberhitzerdampfsammelschiene und mehreren Dampfturbogruppen (mehrere Mitteldruckdampfmischapparate),
Figur 36 zeigt eine Ausführung mit drei Gasturbosätzen mit den zugehörigen Abhitzekesseln mit Zwischenüberhitzung, den jeweiligen Vorschaltdampfturbinen als Mehrwellenanlage, kalter und heisser Zwischenüberhitzerdampfsammelschiene und einer Dampfturbogruppe (Mitteldruckdampfmischapparat),
Figur 37 zeigt eine Ausführung mit drei Gasturbosätzen mit den zugehörigen Abhitzekesseln mit Zwischenüberhitzung, den jeweiligen Vorschaltdampfturbinen als Mehrwellenanlage, kalter und heisser Zwischenüberhitzerdampfsammelschiene und mehreren Dampfturbogruppen (Mitteldruckdampfmischapparat),
Figur 38 zeigt eine Ausführung mit drei Gasturbosätzen mit den zugehörigen Abhitzekesseln mit Zwischenüberhitzung, den jeweiligen Vorschaltdampfturbinen als Mehrwellenanlage, kalter und heisser Zwischenüberhitzerdampfsammelschiene und mehreren Dampfturbogruppen (mehrere Mitteldruckdampfmischapparate),
Figur 39 zeigt eine Ausführung mit drei Gasturbosätzen mit den zugehörigen Abhitzekesseln mit Zwischenüberhitzung, einer Hochdruckdampfsammelschiene, zwei Vorschaltdampfturbinen als Mehrwellenanlage, kalter und heisser Zwischenüberhitzerdampfsammelschiene und einer Dampfturbogruppe (Mitteldruckdampfmischapparat),
Figur 40 zeigt eine Ausführung mit drei Gasturbosätzen mit den zugehörigen Abhitzekesseln mit Zwischenüberhitzung, einer Hochdruckdampfsammelschiene, zwei Vorschaltdampfturbinen als Mehrwellenanlage, kalter und heisser Zwischenüberhitzerdampfsammelschiene und mehreren Dampfturbogruppen (Mitteldruckdampfmischapparat),
Figur 41 zeigt eine Ausführung mit drei Gasturbosätzen mit den zugehörigen Abhitzekesseln mit Zwischenüberhitzung, einer Hochdruckdampfsammelschiene, zwei Vorschaltdampfturbinen als Mehrwellenanlage, kalter und heisser Zwischenüberhitzerdampfsammelschiene und mehreren Dampfturbogruppen (mehrere Mitteldruckdampfmischapparate),
Figur 42 zeigt eine Ausführung mit drei Gasturbosätzen mit den zugehörigen Abhitzekesseln mit Zwischenüberhitzung, einer Hochdruckdampfsammelschiene, einer einzigen Vorschaltdampfturbine als Mehrwellenanlage, kalter und heisser Zwischenüberhitzerdampfsammelschiene und einer Dampfturbogruppe (Mitteldruckdampfmischapparat),
Figur 43 zeigt eine Ausführung mit drei Gasturbosätzen mit den zugehörigen Abhitzekesseln mit Zwischenüberhitzung, einer Hochdruckdampfsammelschiene, einer einzigen Vorschaltdampfturbine als Mehrwellenanlage, kalter und heisser Zwischenüberhitzerdampfsammelschiene und mehreren Dampfturbogruppen (Mitteldruckdampfmischapparat),
Figur 44 zeigt eine Ausführung mit drei Gasturbosätzen mit den zugehörigen Abhitzekesseln mit Zwischenüberhitzung, einer Hochdruckdampfsammelschiene, einer einzigen Vorschaltdampfturbine als Mehrwellenanlage, kalter und heisser Zwischenüberhitzerdampfsammelschiene und mehreren Dampfturbogruppen (mehrere Mitteldruckdampfmischapparate),
Figur 45 zeigt eine Ausführung mit drei Gasturbosätzen mit den zugehörigen Abhitzekesseln mit Zwischenüberhitzung, den jeweiligen Vorschaltdampfturbinen bestehend aus Hochdruck- und Mitteldruckteil als Einwellenanlage, Niederdruckdampfsammelschiene und einer Dampfturbogruppe,
Figur 46 zeigt eine Ausführung mit drei Gasturbosätzen mit den zugehörigen Abhitzekesseln mit Zwischenüberhitzung, den jeweiligen Vorschaltdampfturbinen bestehend aus Hochdruck- und Mitteldruckteil als Einwellenanlage, Niederdruckdampfsammelschiene und mehreren Dampfturbogruppen,
Figur 47 zeigt eine Ausführung mit drei Gasturbosätzen mit den zugehörigen Abhitzekesseln mit Zwischenüberhitzung, den jeweiligen Vorschaltdampfturbinen bestehend aus Hochdruck- und Mitteldruckteil als Mehrwellenanlage, Niederdruckdampfsammelschiene und einer Dampfturbogruppe,
Figur 48 zeigt eine Ausführung mit drei Gasturbosätzen mit den zugehörigen Abhitzekesseln mit Zwischenüberhitzung, den jeweiligen Vorschaltdampfturbinen bestehend aus Hochdruck- und Mitteldruckteil als Mehrwellenanlage, Niederdruckdampfsammelschiene und mehreren Dampfturbogruppen,
Figur 49 zeigt eine Ausführung mit drei Gasturbosätzen mit den zugehörigen Abhitzekesseln mit Zwischenüberhitzung, zwei Vorschaltdampfturbinen bestehend aus Hochdruck- und Mitteldruckteil als Mehrwellenanlage, Niederdruckdampfsammelschiene und einer Dampfturbogruppe,
Figur 50 zeigt eine Ausführung mit drei Gasturbosätzen mit den zugehörigen Abhitzekesseln mit Zwischenüberhitzung, zwei Vorschaltdampfturbinen bestehend aus Hochdruck- und Mitteldruckteil als Mehrwellenanlage, Niederdruckdampfsammelschiene und mehreren Dampfturbogruppen,
Figur 51 zeigt eine Ausführung mit drei Gasturbosätzen mit den zugehörigen Abhitzekesseln mit Zwischenüberhitzung, einer einzigen Vorschaltdampfturbine bestehend aus Hochdruck- und Mitteldruckteil als Mehrwellenanlage, Abdampfleitung und einer Dampfturbogruppe,
Figur 52 zeigt eine Ausführung mit drei Gasturbosätzen mit den zugehörigen Abhitzekesseln mit Zwischenüberhitzung, einer einzigen Vorschaltdampfturbine bestehend aus Hochdruck- und Mitteldruckteil als Mehrwellenanlage, Abdampfleitung und mehreren Dampfturbogruppen.

### Wege zur Ausführung der Erfindung

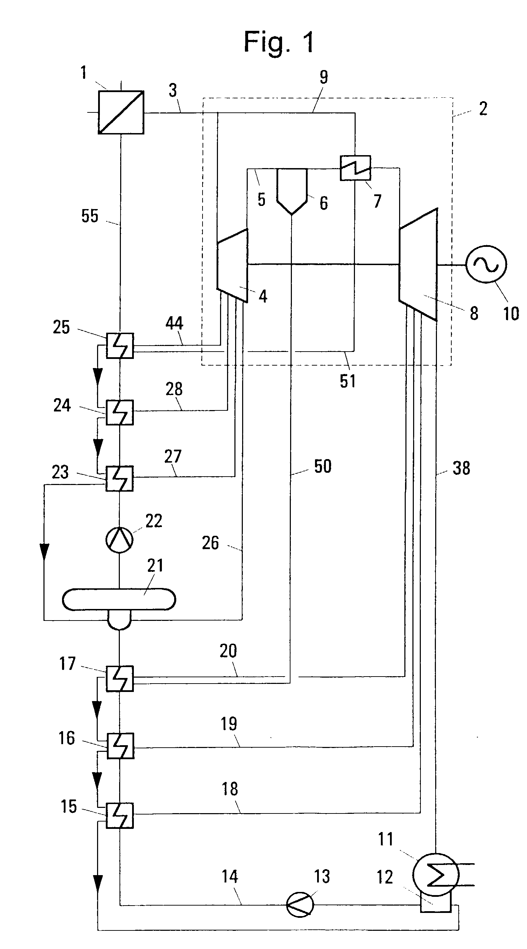

Figur 1 zeigt beispielhaft für ein Sattdampf erzeugendes System mit mindestens einer Dampfturbogruppe schematisch den Wasser-/Dampf-Kreislauf eines Kernkraftwerkes.

In einem nuklearen Dampferzeugungssystem 1 wird Sattdampf erzeugt, welcher in einem wesentlichen Teil durch die Dampfleitung 3 der Sattdampfmitteldruckdampfturbine 4 der Dampfturbogruppe 2 zugeführt wird. Der weitere Teil des erzeugten Sattdampfes wird dem Zwischenüberhitzer 7 zugeführt. Bei der gezeigten Ausführung weist die Dampfturbogruppe 2 eine Sattdampfmitteldruckdampfturbine 4 auf. Der Abdampf dieser Sattdampfmitteldruckdampfturbine 4 strömt über eine Überströmleitung 5, einen Separator (Feuchtigkeitsabscheider) 6 und einen Zwischenüberhitzer 7 zur Niederdruckdampfturbine 8. Dem Zwischenüberhitzer 7 wird Dampf vom nuklearen Dampferzeugungssystem 1 über die Abzweigdampfleitung 9 zugeführt. Im Gegensatz zur Zwischenüberhitzung in einem Kessel spricht man hier von einer Zwischenüberhitzung mit strömendem Dampf. Die Sattdampfmitteldruckdampfturbine 4 und die Niederdruckdampfturbine 8 treiben über eine Welle den Generator 10 an.

Das Kondensat aus dem Separator 6 und dem Zwischenüberhitzer 7 leitet man aus energetischen Gründen dem zum entsprechenden Dampfdruck zugehörigen Vorwärmer bzw. der nächst niedrigeren Druckstufe zu. Das heisst, im vorliegenden Fall wird das im Zwischenüberhitzer 7 anfallende Dampfkondenat über die Kondensatleitung 51 dem letzten vor dem nuklearen Dampferzeugungssystem 1 liegenden Hochdruckvorwärmer 25 (HD-Vorwärmer) und das Kondensat aus dem Separator 6 über die Kondensatleitung 50 dem vor dem Speisewasserbehälter/Entgaser 21 liegenden Niederdruckvorwärmer 17 (ND-Vorwärmer) zugeführt.

Der Abdampf der Niederdruckdampfturbine 8 strömt über die Abdampfleitung 38 zum Kondensator 11 mit dem Hotwell 12.

Vom Hotwell 12 wird das Kondensat mittels der Kondensatpumpe 13 durch die Kondensatleitung 14 zu den ND-Vorwärmern 15,16,17 gefördert. Die ND-Vorwärmer 15, 16, 17 werden mittels der Anzapfdampfleitungen 18, 19, 20 aus der Niederdruckdampfturbine 8 mit Dampf versorgt.

Die Anzahl und Anordnung der ND-Vorwärmer sind als Beispiel zur Erläuterung der Anlage zu betrachten. Wie bekannt, kann die Vorwärmung in einem Dampfkraftwerk in vielen unterschiedlichen Varianten ausgeführt werden.

Dem ND-Vorwärmer 17 folgt in Richtung des Speisewassers der Speisewasserbehälter/Entgaser 21. Von diesem wird das Speisewasser durch die Hochdruckspeisewasserpumpe 22 zu den HD-Vorwärmern 23, 24, 25 gefördert. Die entsprechenden, von der Sattdampfmitteldruckdampfturbine 4 aus verlaufenden Anzapfdampfleitungen zum Speisewasserbehälter/Entgaser 21 und zu den HD-Vorwärmern 23, 24, 25 sind mit den Bezugsziffern 26, 27, 28, 44 bezeichnet.

Auch die HD-Vorwärmer können hinsichtlich Anzahl und Anordnung in den unterschiedlichsten Varianten ausgeführt werden.

Vom letzten HD-Vorwärmer 25 strömt das Speisewasser schliesslich über die Speisewasserleitung 55 zum nuklearen Dampferzeugungssystem 1.

In der Figur 1 wird das Anzapfdampfkondensat der Vorwärmer kaskadenförmig in den Speisewasserbehälter/Entgaser 21 bzw. den Hotwell 12 abgeleitet. Selbstverständlich sind in diesem Bereich die unterschiedlichsten Schaltungsvarianten möglich.

Während das Kondensat der HD-Vorwärmer wie dargestellt in der Regel kaskadenförmig in den Speisewasserbehälter/Entgaser 21 abgeleitet wird, sind innerhalb von Niederdruckvorwärmsäulen vielfältige Kombinationen von Kaskaden- und Zubringerpumpenschaltung möglich.

Die Gestaltung der Vorwärmsäule, d. h. die Art der Kondensatableitung sowie das Vorhandensein von Enthitzern und Nachkühlern, ist hinsichtlich der vorliegenden Erfindung nicht relevant.

Speziell bei den mit Leichtwasserreaktoren realisierbaren Dampftemperaturen im Bereich von 260 bis 315°C verlangt der optimale Dampfkraftprozess am Dampfturbineneintritt Sattdampfbedingungen bzw. eine nur leichte Dampfüberhitzung bis maximal 30 K. Demzufolge liegen die Drücke am Dampfturbineneintritt im Bereich von 45 bis 70 bar. Aus Gründen der technischen Machbarkeit, aber auch aus wirtschaftlichen Gründen scheidet bei den meisten Leichtwasserreaktortechnologien eine Zwischenüberhitzung durch das nukleare System aus. Zur Abarbeitung des Dampfes in einem Niederdruckteil bietet sich daher nur die Dampftrocknung in einem Separator 6, gefolgt von einer Zwischenüberhitzung 7 mit strömendem Dampf an.

Unter dem nachfolgend verwendeten Begriff des Sattdampfes in bezug auf Parameter am Dampfturbineneintritt bzw. in bezug auf die Bezeichnung einer Dampfturbine werden Dampfzustände am Dampfturbineneintritt im Bereich geringer Feuchte von ca. 5-8 % bis zu einer Ueberhitzung von maximal 30 K verstanden.

Unter einem Sattdampf erzeugenden System 1 ist
- ein Sattdampfkessel bzw.
- ein nukleares Dampferzeugungssystem zu verstehen. Dabei sind das Funktionsprinzip, die Bauform, die Parameter u. dgl. ohne Bedeutung. Bei einem nuklearen Dampferzeugungssystem kann es sich um einen Siedewasserreaktor aber auch um einen Druckwasserreaktor mit den mehreren Primärkreisläufen handeln.

Die im nachfolgenden verwendete Bezeichnung der Dampfturbogruppe 2 schliesst neben der Sattdampfmitteldruckdampfturbine 4 auch die Niederdruckdampfturbine 8 sowie den Separator 6, den Zwischenüberhitzer 7 und die verbindenden Leitungen 3, 5, 9 ein.

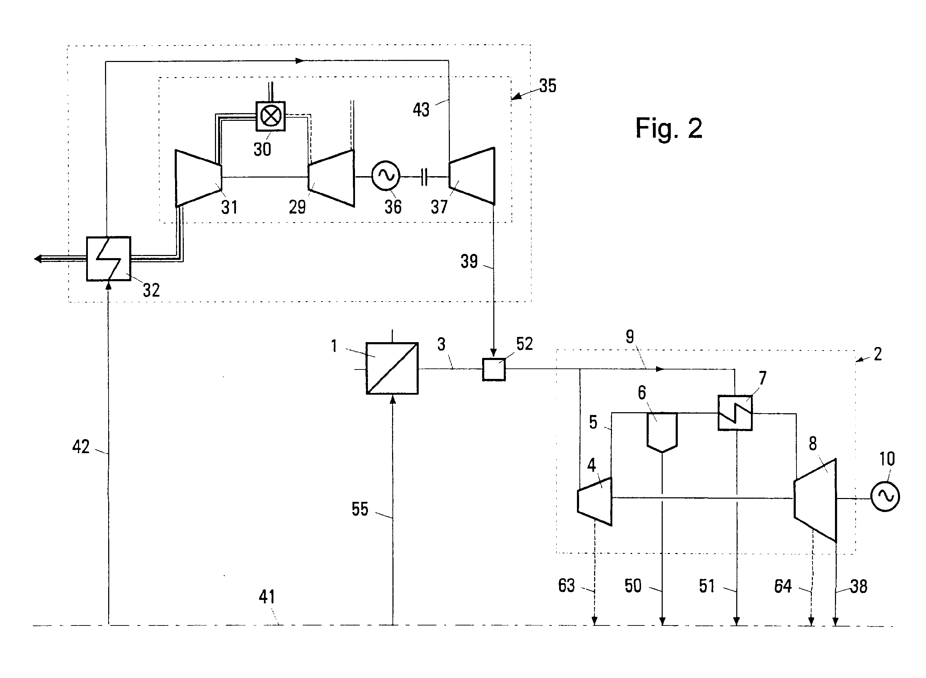

Wenn nun das nukleare Dampferzeugungssystem 1 des Kraftwerkes aus einem der eingangs erwähnten Gründe mit verringerter Leistung betrieben werden muss, wird das Kraftwerk in einer ersten Variante mit mindestens einem Gasturbosatz 29, 30, 31, 36, mindestens einem Abhitzekessel 32, mindestens einer Vorschaltdampfturbine 37 und mindestens einem Mitteldruckdampfmischapparat 52, welcher sich in der Dampfleitung 3 zwischen dem nuklearen Dampferzeugssystem 1 und der Dampfturbogruppe 2 befindet, nachgerüstet, wie in der Figur 2 vereinfacht dargestellt ist.

Der Gasturbosatz 29, 30, 31, 36 enthält einen Kompressor 29, eine Brennkammer 30, eine Gasturbine 31 und einen Generator 36. Das Abgas der Gasturbine 31 wird im Abhitzekessel 32 zum Zwecke der Dampferzeugung genutzt. Der vom Abhitzekessel 32 kommende Dampf wird der Vorschaltdampfturbine 37 über die Frischdampfleitung 43 zugeführt. Der Abdampf der Vorschaltdampfturbine 37 wird über die Abdampfleitung 39 dem Mitteldruckdampfmischapparat 52 zugeführt, welchem auch der Dampf des nuklearen Dampferzeugungssystems 1 zugeführt wird. Vom Mitteldruckdampfmischapparat 52 strömt der Dampf zur bestehenden Dampfturbogruppe 2.

Der Generator 36 des Gasturbosatzes 29, 30, 31, 36 ist mit der Vorschaltdampfturbine 37 über eine Kupplung verbunden, so dass eine Einwellenanlage 35 gebildet wird.

Die Dampfparameter des Abhitzekessels 32 und die Ausführung der Vorschaltdampfturbine 37 sind nun so gewählt, dass die Abdampfparameter der Vorschaltdampfturbine 37 den Bedingungen der bestehenden Sattdampfmitteldruckdampfturbine 4 sowie des Zwischenüberhitzers 7 entsprechen.

Damit wird das nukleare Dampferzeugungssystem 1 in dieser ersten Variante mit mindestens einem Gasturbosatz, bestehend aus Kompressor 29, Brennkammer 30, Gasturbine 31 und Generator 36, mindestens einem Abhitzekessel 32, mindestens einer Vorschaltdampfturbine 37 und mindestens einem Mitteldruckdampfmischapparat 52 nachgerüstet.

Die Linie 41 kennzeichnet die Schnittstelle zum Wasser-/Dampf-Kreislauf, zu welchem die verschiedenen Kondensat- bzw. Dampfleitungen führen und von welchem die Speisewasserleitung 42 zum Abhitzekessel 32 bzw. die Speisewasserleitung 55 zum nuklearen Dampferzeugungssystem 1 zurück kommt.

Bei einem Dampfkraftwerk besteht die Möglichkeit den Wirkungsgrad des Dampfprozesses durch Anhebung der Speisewassertemperatur durch regenerative Vorwärmung zu erhöhen. Aus diesem Grund verfügen Kernkraftwerke wie in der Figur 1 dargestellt über eine mehrstufige regenerative Vorwärmung.

Bei einem Kombikraftwerk, d. h. bei Nutzung der Abwärme einer Gasturbine zur Dampferzeugung in einem Abhitzekessel ist der Wirkungsgrad des Gesamtprozesses dann maximal, wenn die Leistung der Dampfturbine maximal ist. Dies bedeutet eine möglichst tiefe Abkühlung des Abgases im Abhitzekessel, was wiederum eine regenerative Vorwärmung verbietet. Die Vorwärmung des Speisewassers/ Kondensates sollte vorteilhafter Weise im Abhitzekessel erfolgen.

Aus Gründen der Vermeidung von Taupunktkorrosion am kalten Ende des Abhitzekessels darf eine minimale Speisewassertemperatur beispielsweise in Abhängigkeit des Schwefelgehaltes des Gasturbinenbrennstoffes nicht unterschritten werden. Ferner kann es erforderlich sein, das zu den Abhitzekesseln geförderte Speisewasser zu entgasen. Beides kann eine beschränkte Vorwärmung des Speisewassers im unteren Temperaturbereich nach sich ziehen. Im konkreten Fall wird man zunächst das Kondensat von Separator 6 und Zwischenüberhitzer 7 nutzen und erst in einem weiteren Schritt eine Anzapfung im unteren Druckbereich realisieren.

Bei allen Varianten der Nachrüstung des Kernkraftwerkes kommt es durch die Vorschaltung einer Vorschaltdampfturbine zu einer Anhebung der Frischdampfparameter. Damit sind zumindest die Hochdruckvorwärmer und eventuell auch die Hochdruckspeisewasserpumpe in ihrer bestehenden Auslegung für das nachgerüstete System nicht einsetzbar. Demgegenüber könnten die Kondensatpumpe 13, die Niederdruckvorwärmer 15-17 und der Speisewasserbehälter/Entgaser 21 für das nachgerüstete System möglicherweise mitgenutzt werden.

Der nach der Figur 1 beschriebene Wasser/Dampf-Kreislauf mit Kondensator und Hotwell, der Kondensatpumpe und der regenerativen Vorwärmsäule, bestehend aus den ND-Vorwärmern, dem Speisewasserbehälter/Entgaser, der Hochdruckspeisewasserpumpe und den HD-Vorwärmern, den Anzapfdampfleitungen, den Kondensatabführungen und dergleichen bleibt für das nukleare Dampferzeugungssystem 1 bestehen.

Der mindestens eine nachgerüstete Abhitzekessel 32 könnte entsprechend den zu erbringenden Dampfparametern beispielsweise durch die vorhandene Hochdruckspeisewasserpumpe 22 aus dem Speisewasserbehälter/Entgaser 21 oder eine separate Speisewasserpumpe aus dem Hotwell 12 des Kondensators 11 oder aus dem Speisewasserbehälter/ Entgaser 21 mit Speisewasser versorgt werden.

In welchem Masse die Realisierung der Vorwärmung des Speisewassers des Abhitzekessels im unteren Temperaturbereich im Abhitzekessel bzw. durch anzapfdampfbeheizte Vorwärmer erfolgt, hängt von den zum Einsatz gelangenden konkreten Anlagen, der Kondensattemperatur, dem Brennstoff der Gasturbine, dem thermodynamischen Gesamtkonzept, der chemischen Fahrweise und dergleichen ab.

Die durch die Umrüstung eines Sattdampf erzeugenden Systems mit einer Dampfturbogruppe erforderlichen Anpassungen in diesem Bereich des Wasser-/Dampf-Kreislaufes sind jedoch für die Erfindung ohne Bedeutung und werden von daher in den weiteren Darstellungen nicht betrachtet.

In der Figur 2 und allen folgenden Figuren sind zunächst die vom Wasser-/Dampf-Kreislauf zu den Abhitzekesseln 32 verlaufenden Speisewasserleitungen 42 und die zu dem nuklearen Dampferzeugungssystemen 1 verlaufende Speisewasserleitung 55 dargestellt. Ferner sind die von der Dampfturbogruppe 2 möglicherweise zum Wasser/Dampf-Kreislauf verlaufenden Kondensatleitungen 50,51 und Dampfleitungen 38, 18, 19, 20, 26, 27, 28, 44 einzeln aber auch zusammengefasst dargestellt. Wie bereits erläutert, ist der nicht dargestellte Teil des Wasser-/Dampf-Kreislaufes für die Erfindung ohne Bedeutung.

In dieser ersten Variante ist die nachgerüstete Vorschaltdampfturbine 37 mit der Gasturbinenanlage 29, 30, 31 sowie dem Generator 36 auf einer Welle angeordnet. Man bezeichnet daher diese Konzeption auch als Einwellenanlage 35. Der Vorteil dieser Einwellenanlage 35 besteht zunächst in der Einsparung eines separaten Generators für die Vorschaltdampfturbine 37 sowie in den betrieblichen Vorteilen einer klaren Zuordnung von Gasturbosatz 29, 30, 31, 36, Abhitzekessel 32 und Vorschaltdampfturbine 37.

Neben der beschriebenen Möglichkeit der Realisierung einer Einwellenanlage 35 kann die mindestens eine Vorschaltdampfturbine selbstverständlich auch als separater Dampfturbosatz mit eigenem Generator ausgeführt werden. Man bezeichnet dieses Konzept als Mehrwellenanlage.

Dies kann insbesondere dann vorteilhaft sein, wenn zur Nachrüstung des Kernkraftwerkes eine Vielzahl von Gasturbinenanlagen erforderlich wird. Man kann dann die einzelnen Vorschaltdampfturbosätze zu einem Vorschaltdampfturbosatz zusammenfassen.

Während man bei einer Gasturbinenanlage eine Anlage bestehend aus Kompressor, Brennkammer und Gasturbine versteht, schliesst die Bezeichnung des Gasturbosatzes zusätzlich den Generator ein. Die gleiche Definition gilt für den Dampfturbosatz, welcher die möglicherweise mehreren Dampfturbinenteile und den dazugehörigen Generator umfasst.

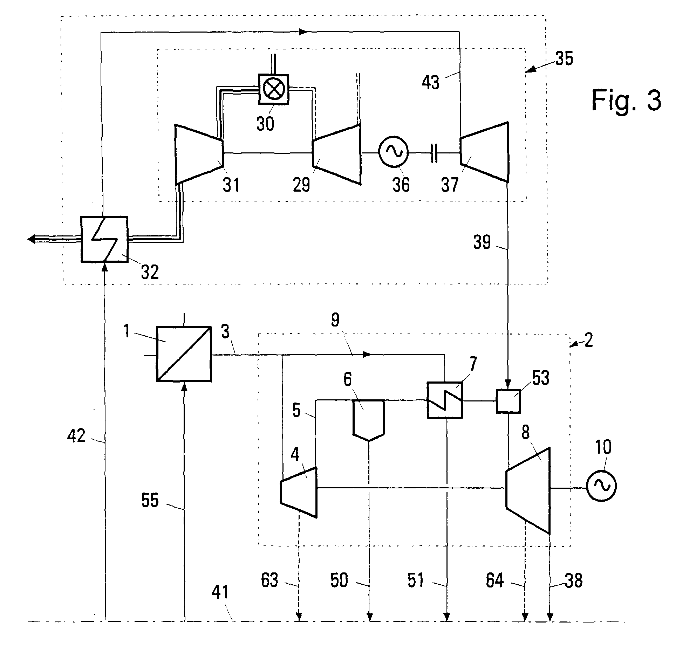

In der Figur 3 wird das nukleare Dampferzeugungssystem 1 entsprechend der ersten Variante nach Figur 2 nachgerüstet. Der Unterschied zur Ausführung nach Figur 2 besteht in der Anordnung eines Niederdruckdampfmischapparates 53 in der Ueberströmleitung 5 unmittelbar vor der Niederdruckdampfturbine 8. In diesem Fall wird der Abdampf der Vorschaltdampfturbine 37 mit dem vom Zwischenüberhitzer 7 kommenden Dampf über den Niederdruckdampfmischapparat 53 der Niederdruckdampfturbine 8 zugeführt.

Diese Ausführungsform gilt auch für die nachfolgenden Varianten.

Mit der Linie 41 ist analog zur Figur 2 die Schnittstelle zum Wasser-/Dampf-Kreislauf gekennzeichnet.

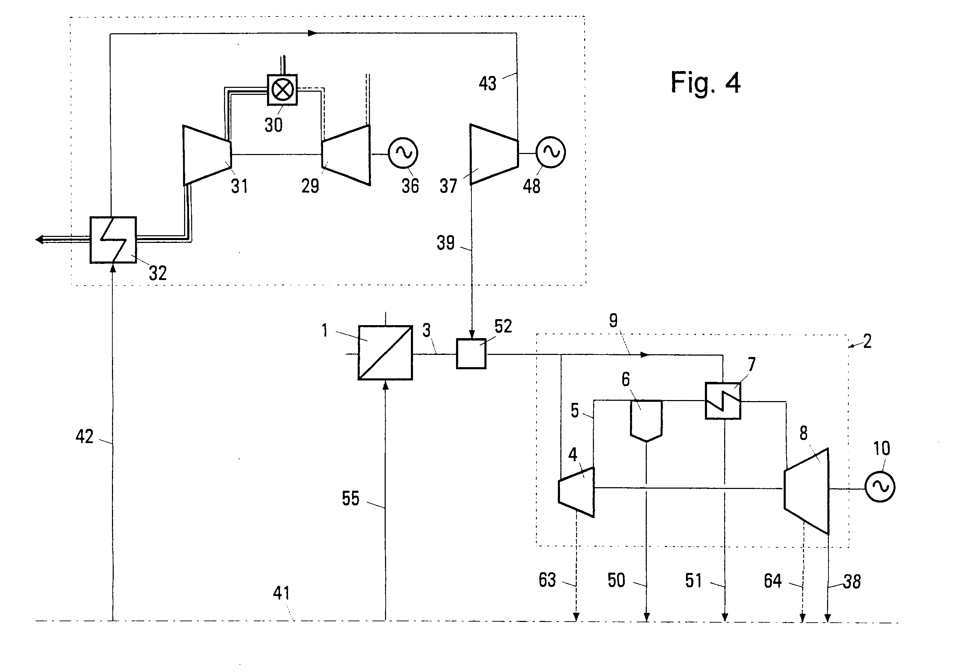

In der Figur 4 ist das nukleare Dampferzeugungssystem 1 entsprechend der ersten Variante nach Figur 2 wiederum mit mindestens einem Gasturbosatz 29, 30, 31, 36, bestehend aus Kompressor 29, Brennkammer 30, Gasturbine 31 und Generator 36, mindestens einem Abhitzekessel 32, mindestens einer Vorschaltdampfturbine 37 und mindestens einem Mitteldruckdampfmischapparat 52 nachgerüstet. Im Unterschied zu Figur 2 verfügt die Vorschaltdampfturbine 37 über einen eigenen Generator 48. Gasturbosatz 29, 30, 31, 36 und Vorschaltdampfturbosatz 37, 48 bilden daher bei dieser Ausführung eine Mehrwellenanlage.

Diese Ausführung der Mehrwellenanlage gilt auch für die nachfolgenden Varianten. Dabei ist die Anzahl der vorhandenen Gasturbosätze unabhängig von der Anzahl der vorhandenen Vorschaltdampfturbosätze.

Mit der Linie 41 ist analog zur Figur 2 die Schnittstelle zum Wasser-/Dampf-Kreislauf gekennzeichnet.

Selbstverständlich könnte auch beim hier vorliegenden Konzept der Mehrwellenanlage der Abdampf der Vorschaltdampfturbine 37 entsprechend der Figur 3 einem Niederdruckdampfmischappatat 53 in der Ueberströmleitung 5 unmittelbar vor der Niederdruckdampfturbine 8 zugeführt werden.

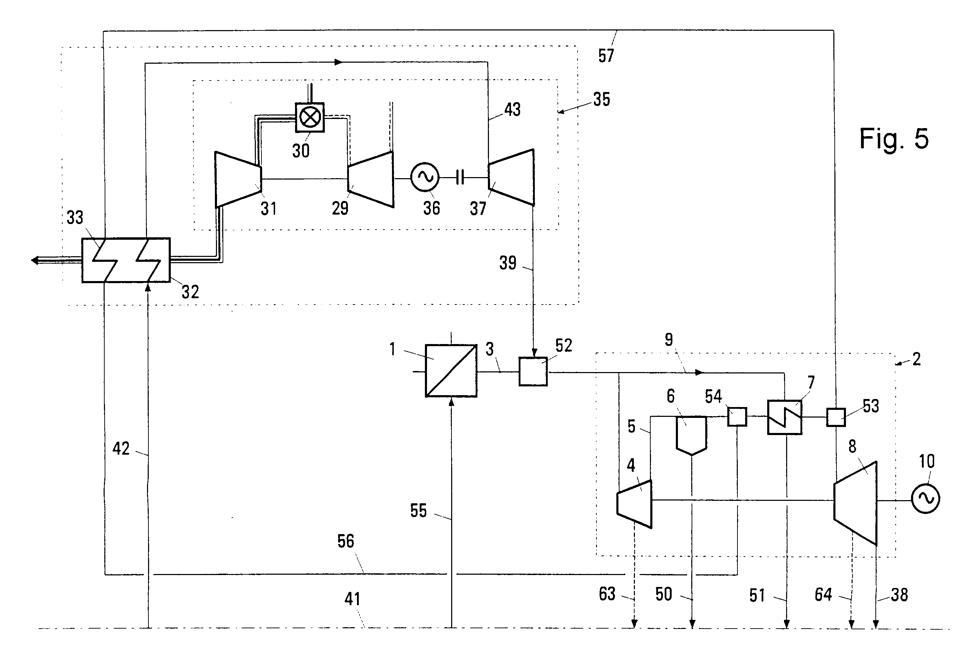

In Figur 5 ist eine weitere auf der ersten Variante aufbauende zweite Variante für die Nachrüstung eines Kernkraftwerkes dargestellt. In dieser zweiten Variante wird der Abdampf der Sattdampfmitteldruckdampfturbine 4 massenstromseitig mindestens anteilig im Abhitzekessel 32 zwischenüberhitzt. Im Unterschied zu Figur 2 wird in der Ausführung nach Figur 5 ein Abhitzekessel 32 mit Zwischenüberhitzer 33 und zusätzlich ein Dampfabzweigapparat 54 und ein Niederdruckdampfmischapparat 53 nachgerüstet.

Nach dem Separator 6 wird über den Dampfabzweigapparat 54 anteilig Dampf über die kalte Zwischenüberhitzerleitung 56 zum Zwischenüberhitzer 33 des Abhitzekessels 32 geführt, dort zwischenüberhitzt, über die heisse Zwischenüberhitzerleitung 57 zur Dampfturbogruppe 2 zurückgeführt und vor der Niederdruckdampfturbine 8 über den Niederdruckdampfmischapparat 53 wieder eingebunden, so dass der Zwischenüberhitzer 7 (mit strömenden Dampf) entlastet wird.

Die Anlageteile, die denjenigen der Ausführung nach Figur 2 entsprechen, sind mit denselben Bezugsziffern bezeichnet. Daher wird auf eine nochmalige Beschreibung derselben verzichtet. Dies gilt auch für die nachfolgenden Figuren.

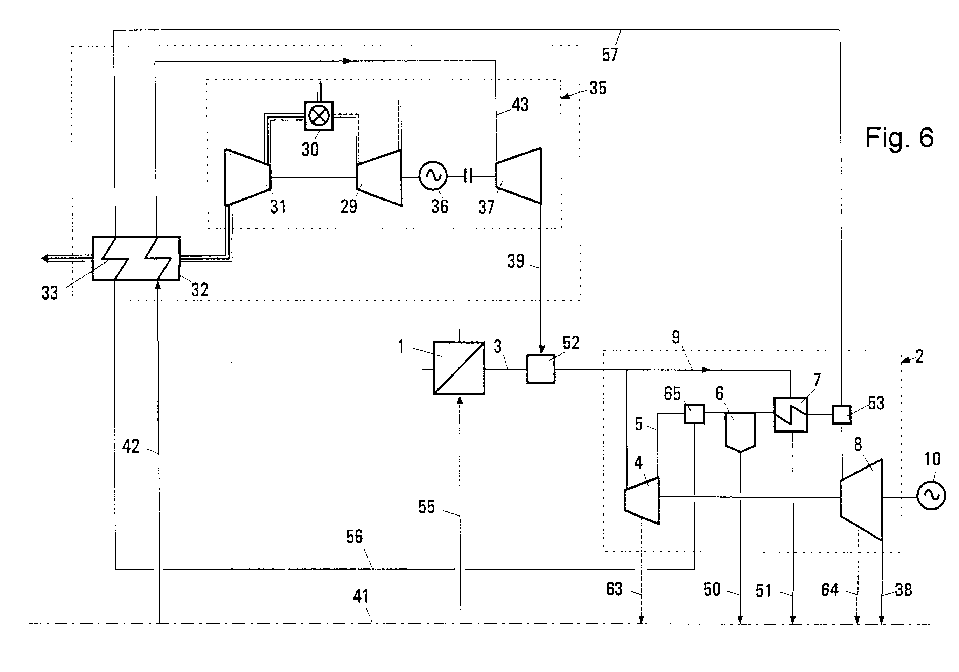

Die Figur 6 ist mit Ausnahme des Dampfabzweigapparates 65 anstelle des Dampfabzweigapparates 54 mit der Figur 5 identisch. Der zum Zwischenüberhitzer 33 des Abhitzekessels 32 zu führende Dampf wird nun über den zwischen der Sattdampfmitteldruckdampfturbine 4 und dem Separator 6 in der Ueberströmleitung 5 angeordneten Dampfabzweigapparat 65 entnommen.

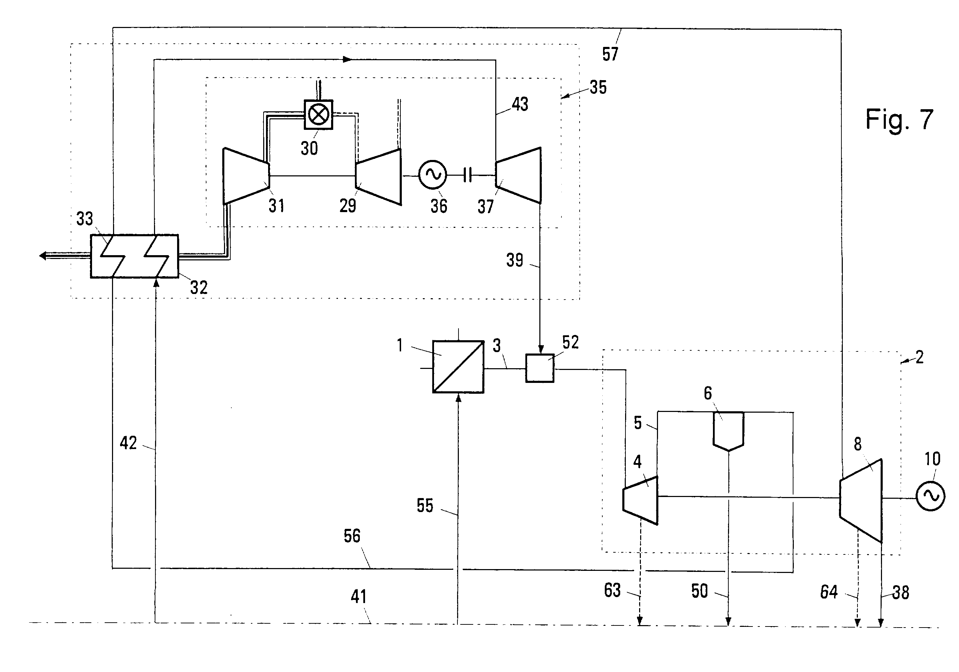

Im Unterschied zu Figur 5 wird in der Ausführung nach Figur 7 der gesamte von der Sattdampfmitteldruckdampfturbine 4 zur Niederdruckdampfturbine 8 strömende Dampf nach dem Separator 6 zum Abhitzekessel 32 geführt, im Zwischenüberhitzer 33 des Abhitzekessels 32 zwischenüberhitzt und anschliessend der Niederdruckdampfturbine 8 zugeführt, so dass der Zwischenüberhitzer 7 (mit strömendem Dampf) entfällt.

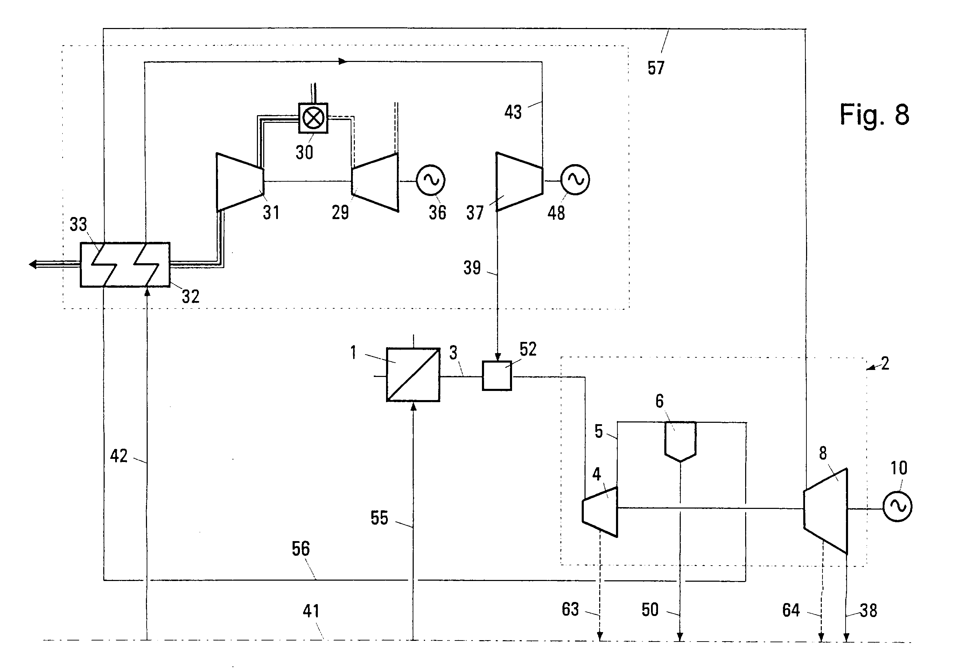

Die Figur 8 entspricht im schaltungstechnischen Aufbau im wesentlichen der Figur 7. Gasturbosatz 29, 30, 31, 36 und Vorschaltdampfturbosatz 37, 48 bilden jedoch bei dieser Ausführung eine Mehrwellenanlage.

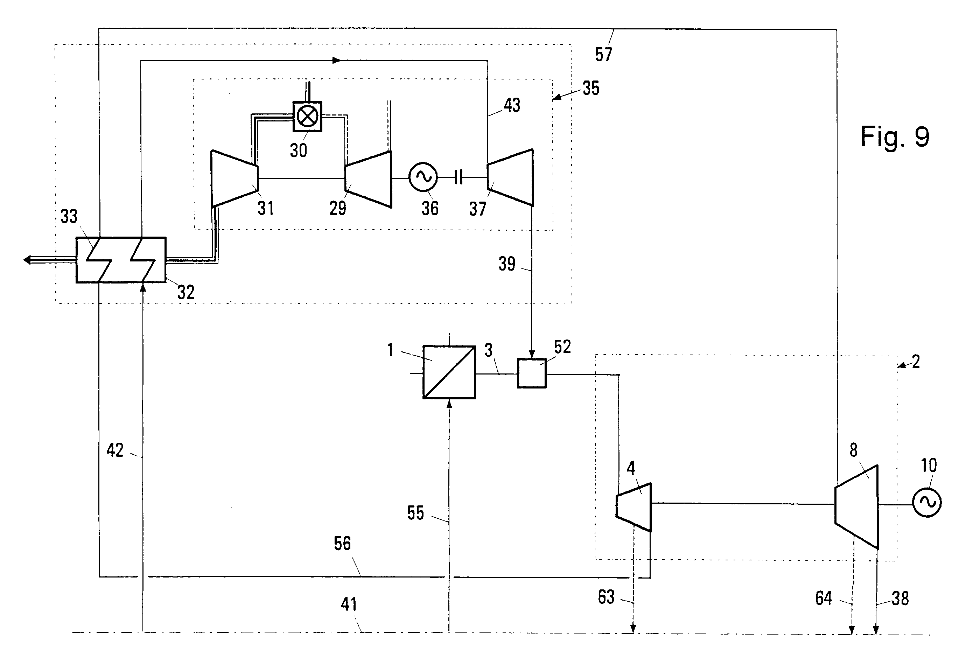

Im Unterschied zu Figur 7 wird in der Ausführung nach Figur 9 der gesamte von der Sattdampfmitteldruckdampfturbine 4 zur Niederdruckdampfturbine 8 strömende Dampf nach der Sattdampfmitteldruckdampfturbine 4 zum Abhitzekessel 32 geführt, im Zwischenüberhitzer 33 des Abhitzekessel 32 zwischenüberhitzt und anschliessend der Niederdruckdampfturbine 8 zugeführt, so dass der Separator 6 und der Zwischenüberhitzer 7 (mit strömendem Dampf) entfallen.

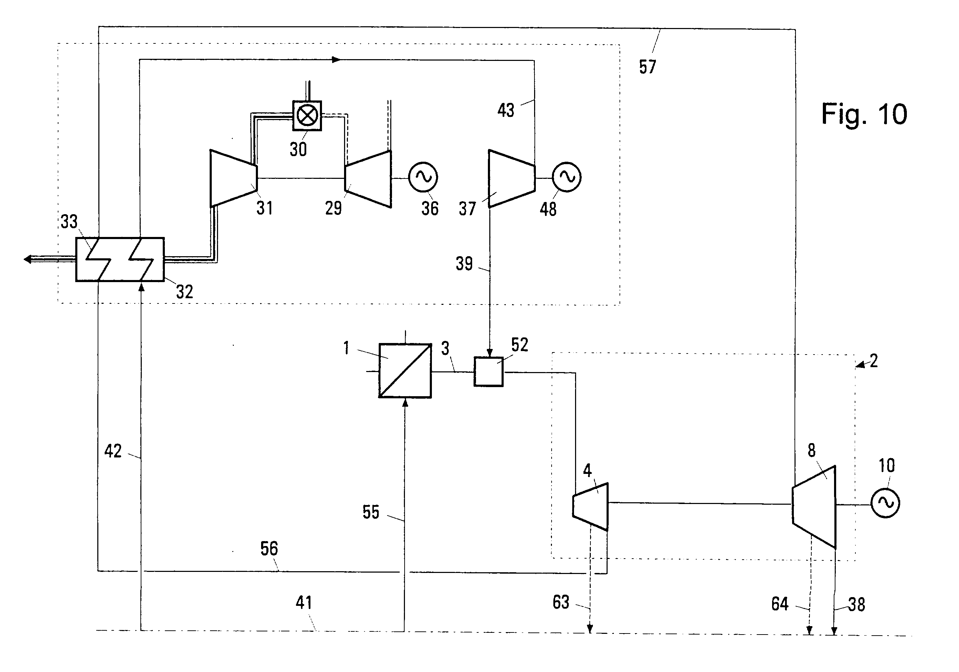

Die Figur 10 entspricht im schaltungstechnischen Aufbau im wesentlichen der Figur 9. Gasturbosatz 29, 30, 31, 36 und Vorschaltdampfturbosatz 37, 48 bilden jedoch bei dieser Ausführung eine Mehrwellenanlage.

Durch die Zwischenüberhitzung des gesamten von der Sattdampfmitteldruckdampfturbine 4 zur Niederdruckdampfturbine 8 strömenden Dampfes im Zwischenüberhitzer 33 des Abhitzekessels 32 können in den Figuren 7 bis 10 die Dampfabzweigapparate 54, 65 und der Dampfmischapparat 53 entfallen.

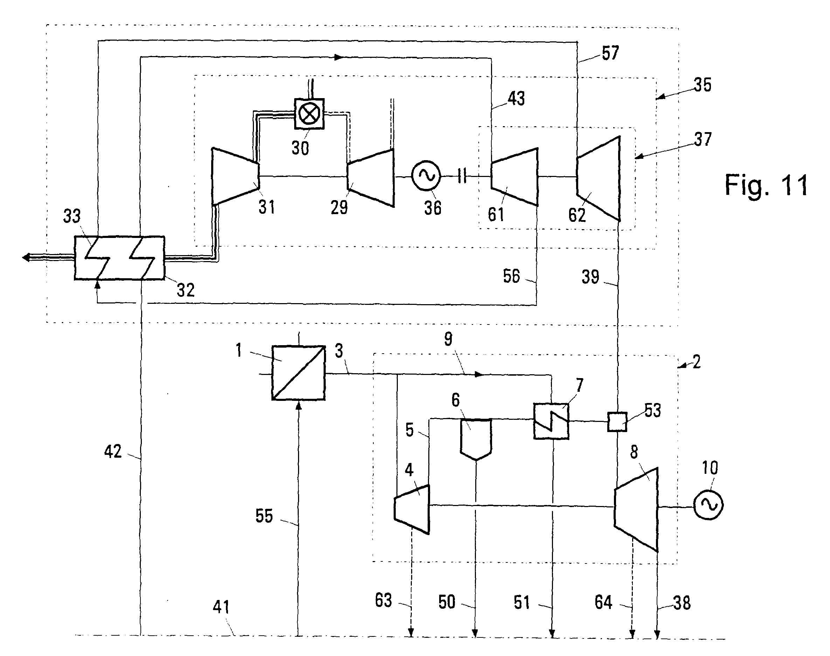

Bei der in Figur 11 dargestellten dritten Variante wird das nukleare Dampferzeugungssystem 1 und die Dampfturbogruppe 2 mit mindestens einem Gasturbosatz 29, 30, 31, 36, mindestens einem Abhitzekessel 32 mit Zwischenüberhitzer 33, mindestens eine Vorschaltdampfturbine 37, bestehend aus einem Hochdruckteil 61 und einem Mitteldruckteil 62 und mindestens einem Niederdruckdampfmischapparat 53 vor der Niederdruckdampfturbine 8 der bestehenden Dampfturbogruppe 2 nachgerüstet. Der im Abhitzekessel 32 erzeugte Dampf wird über die Frischdampfleitung 43 dem Hochdruckteil 61 der Vorschaltdampfturbine 37 zugeführt, im Hochdruckteil 61 der Vorschaltdampfturbine 37 entspannt, über die kalte Zwischenüberhitzerleitung 56 dem Zwischenüberhitzer 33 des Abhitzekessels 32 zugeführt, im Abhitzekessel 32 zwischenüberhitzt und über die heisse Zwischenüberhitzerleitung 57 dem Mitteldruckteil 62 der Vorschaltdampfturbine 37 zugeführt. Der Abdampf des Mitteldruckteiles 62 der Vorschaltdampfturbine 37 wird über die Abdampfleitung 39 dem Niederdruckdampfmischapparat 53 vor der Niederdruckdampfturbine 8 zugeführt. Die Vorschaltdampfturbine 37 bestehend aus dem Hochdruckteil 61 und dem Mitteldruckteil 62 bildet mit dem Gasturbosatz 29, 30, 31, 36 eine Einwellenanlage 35.

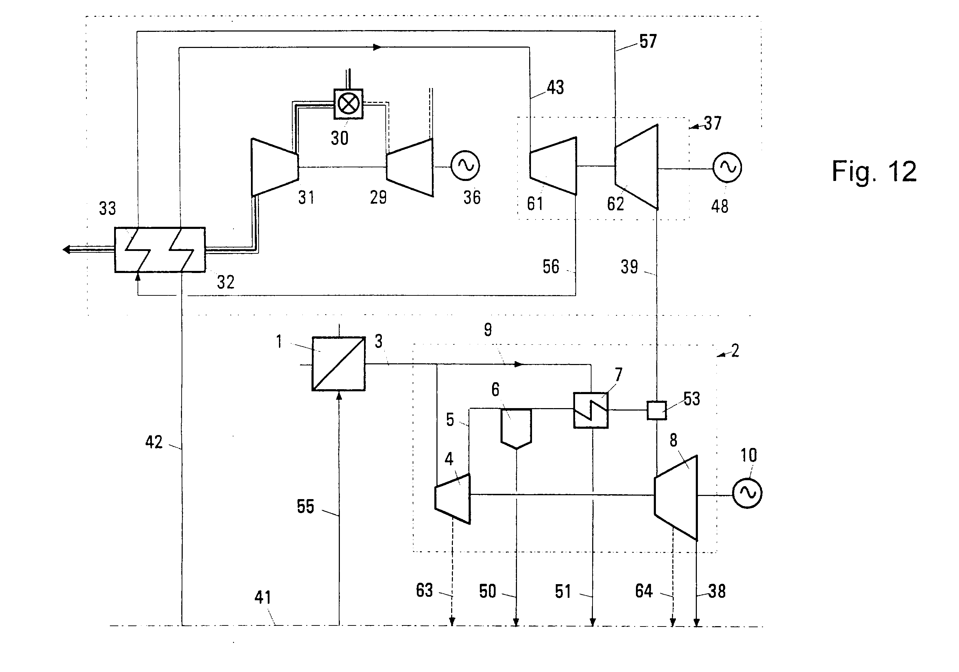

Die Figur 12 entspricht im schaltungstechnischen Aufbau im wesentlichen der Figur 11. Gasturbosatz 29, 30, 31, 36 und Vorschaltdampfturbosatz 37, 48 bilden jedoch bei dieser Ausführung eine Mehrwellenanlage.

Analog zur Figur 2 kann der Abdampf der Vorschaltdampfturbine 37 über die Abdampfleitung 39 auch auf einen in der Dampfleitung 3 angeordneten Mitteldruckdampfmischapparat 52 geleitet werden.

Aus Gründen der Begrenzung des Umfanges können nicht alle möglichen Kombinationen der einzelnen Varianten als Figur dargestellt und beschrieben werden.

Es wurde eingangs ausgesagt, dass das nukleare Dampferzeugungssystem mit mindestens einem Gasturbosatz, mindestens einem Abhitzekessel, mindestens einer Vorschaltdampfturbine und mindestens einem Dampfmischapparat nachgerüstet wird.

In den Figuren 2 bis 12 ist jeweils nur ein Gasturbosatz mit Abhitzekessel und eine Vorschaltdampfturbine dargestellt. Die Möglichkeit des Vorhandenseins mehrerer Einheiten ist durch die Umrahmung von Gasturbosatz, Abhitzekessel und Vorschaltdampfturbine angedeutet.

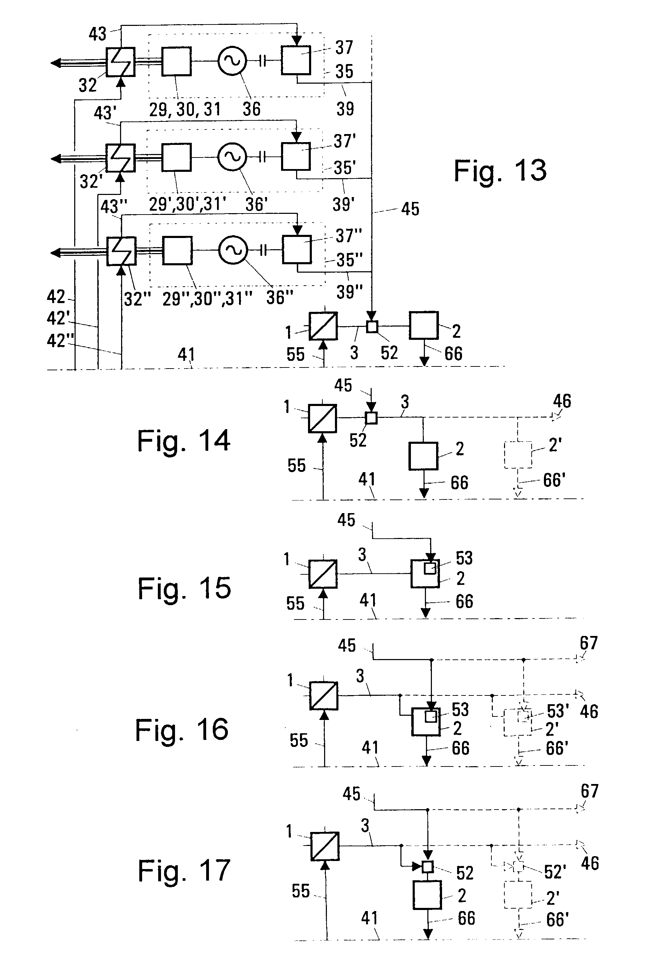

Die Figuren 13 bis 52 zeigen verschiedene schaltungstechnische Möglichkeiten (Ausführungen) eines nachgerüsteten Kraftwerkes, das mehrere Gasturbosätze enthält. Als Beispiel sind jeweils drei Gasturbosätze angenommen.

Die Figur 13 zeigt eine Ausführung der Variante nach Figur 2. Es sind die beispielsweise drei Gasturbosätze 29, 30, 31, 36; 29', 30', 31', 36'; 29", 30", 31" ,36" mit den ihnen zugeordneten Abhitzekesseln 32, 32', 32" vorhanden. Die Gasturbosätze 29, 30, 31, 36; 29', 30', 31', 36'; 29", 30", 31", 36" sind mit den Vorschaltdampfturbinen 37, 37', 37" als Einwellenanlagen 35, 35', 35" ausgeführt. Der in den Abhitzekesseln 32, 32', 32" erzeugte Dampf wird über die Frischdampfleitungen 43, 43', 43" drei Vorschaltdampfturbinen 37, 37', 37" zugeführt. Die Vorschaltdampfturbinen 37, 37', 37" stehen abdampfseitig über die Abdampfleitungen 39, 39', 39" mit einer Mitteldruckdampfsammelschiene 45 in Verbindung. Diese Mitteldruckdampfsammelschiene 45 verläuft zum Mitteldruckdampfmischapparat 52. Der Mitteldruckdampfmischapparat 52 führt die vom nuklearen Dampferzeugungssystem 1 und der Mitteldruckdampfsammelschiene 45 kommenden Dampfmassenströme zusammen und beaufschlagt damit über die Dampfleitung 3 die Dampfturbogruppe 2.

Im Unterschied zu Figur 13 beaufschlagen in Figur 14 die im Mitteldruckdampfmischapparat 52 zusammengeführten Dampfmassenströme über die Dampfleitung 3 die mehreren Dampfturbogruppen 2, 2',...

Mit dem Pfeil 46 ist eine verlängerte Dampfleitung 3 und das Vorhandensein von mehr als zwei Dampfturbogruppen angedeutet.

Die Ausführung nach Figur 15 ist auf der Ausführung nach Figur 3 und 13 aufgebaut. Der über die Mitteldruckdampfsammelschiene 45 kommende Dampf wird bei dieser Ausführung einem Niederdruckdampfmischapparat 53 innerhalb der Dampfturbogruppe 2 zugeführt.

Die Ausführung nach Figur 16 ist auf der Ausführung nach Figur 15 aufgebaut. Der über die Mitteldruckdampfsammelschiene 45 kommende Dampf wird bei dieser Ausführung den jeweiligen Niederdruckdampfmischapparaten 53, 53',... innerhalb der mehreren Dampfturbogruppen 2, 2',... zugeführt.

Mit den Pfeilen 46 und 67 ist eine verlängerte Dampfleitung 3 und eine verlängerte Mitteldruckdampfsammelschiene 45 sowie das Vorhandensein von mehr als zwei Dampfturbogruppen angedeutet.

Die Ausführung nach Figur 17 ist auf der Ausführung nach Figur 14 aufgebaut. Der über die Mitteldruckdampfsammelschiene 45 kommende Dampf wird bei dieser Ausführung den jeweiligen Mitteldruckdampfmischapparaten 52, 52',... in der Dampfleitung 3 unmittelbar vor den mehreren Dampfturbogruppen 2, 2',... zugeführt.

Mit den Pfeilen 46 und 67 ist eine verlängerte Dampfleitung 3 und eine verlängerte Mitteldruckdampfsammelschiene 45 sowie das Vorhandensein von mehr als zwei Dampfturbogruppen angedeutet.

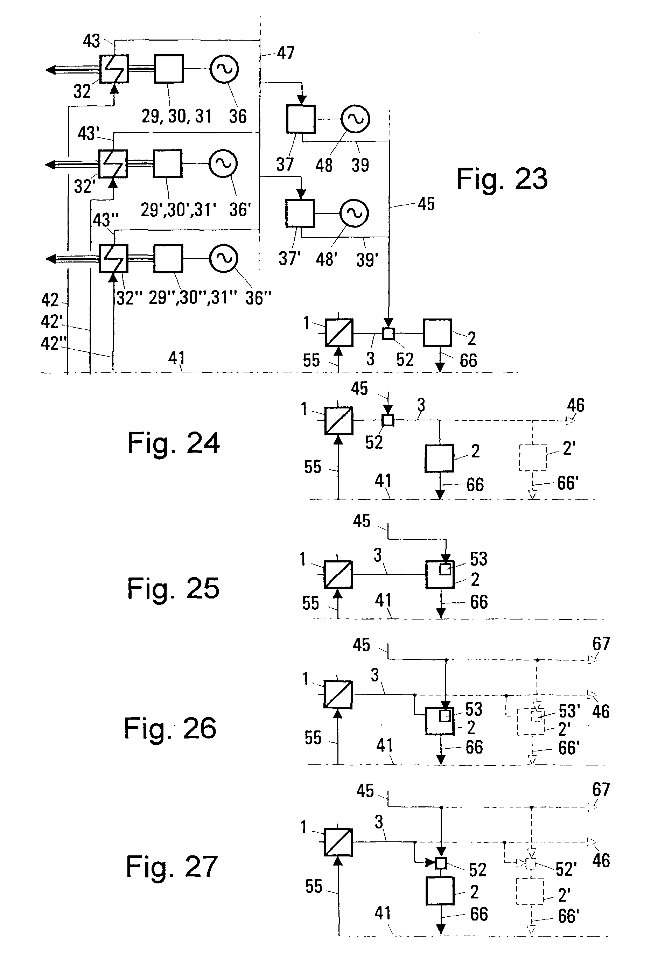

Bei den Ausführungen nach den Figuren 13 bis 17 könnte der Dampf der Abhitzekessel 32, 32', 32" (analog Figur 23) auch über eine Hochdruckdampfsammelschiene 47 zunächst zusammengefasst und dann auf die Vorschaltdampfturbinen 37, 37', 37" aufgeteilt werden.

Generell richtet sich die konkrete Anzahl dieser Dampfturbogruppen 2, 2',... nach der Anzahl der im Kraftwerk vorhanden Dampfturbogruppen.

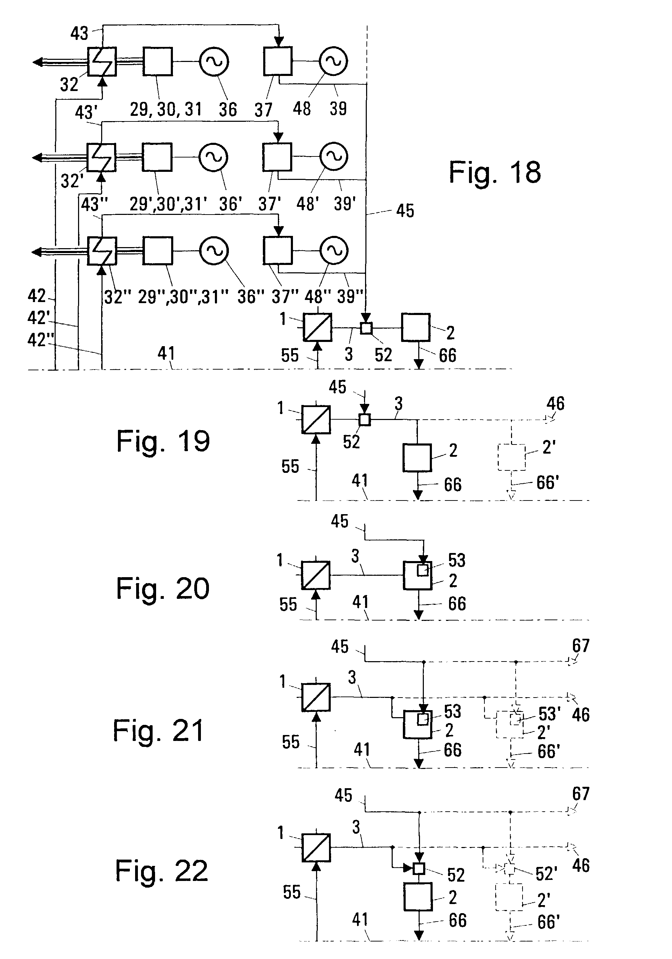

Die Ausführung nach Figur 18 ist auf der Ausführung nach Figur 4 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Der in den Abhitzekesseln 32, 32', 32" erzeugte Dampf wird über die Frischdampfleitungen 43, 43', 43" drei Vorschaltdampfturbinen 37, 37', 37" zugeführt. Die Vorschaltdampfturbinen 37, 37', 37" sind von den Gasturbosätzen 29, 30, 31, 36; 29', 30', 31', 36'; 29", 30", 31", 36" getrennt und mit jeweils einem eigenen Generator 48, 48', 48" gekoppelt. D. h., die Gasturbosätze 29, 30, 31, 36; 29', 30', 31', 36'; 29", 30", 31", 36" und die Vorschaltdampfturbosätze 37,48; 37',48';37",48" bilden Mehrwellenanlagen. Die Vorschaltdampfturbinen 37, 37', 37" stehen abdampfseitig über die Abdampfleitungen 39, 39', 39" und die Mitteldruckdampfsammelschiene 45 mit dem Mitteldruckdampfmischapparat 52 in Verbindung. Der Mitteldruckdampfmischapparat 52 führt die vom nuklearen Dampferzeugungssystem 1 und der Mitteldruckdampfsammelschiene 45 kommenden Dampfmassenströme zusammen und beaufschlagt damit über die Dampfleitung 3 die Dampfturbogruppe 2.

Im Unterschied zu Figur 18 beaufschlagen in Figur 19 die im Mitteldruckdampfmischapparat 52 zusammengeführten Dampfmassenströme über die Dampfleitung 3 die mehreren Dampfturbogruppen 2, 2',...

Mit dem Pfeil 46 ist eine verlängerte Dampfleitung 3 und das Vorhandensein von mehr als zwei Dampfturbogruppen angedeutet.

Die Ausführung nach Figur 20 ist auf der Ausführung nach Figur 3 und 18 aufgebaut. Der über die Mitteldruckdampfsammelschiene 45 kommende Dampf wird bei dieser Ausführung einem Niederdruckdampfmischapparat 53 innerhalb der Dampfturbogruppe 2 zugeführt.

Die Ausführung nach Figur 21 ist auf der Ausführung nach Figur 20 aufgebaut. Der über die Mitteldruckdampfsammelschiene 45 kommende Dampf wird bei dieser Ausführung den jeweiligen Niederdruckdampfmischapparaten 53, 53',... innerhalb der mehreren Dampfturbogruppen 2, 2',... zugeführt.

Mit den Pfeilen 46 und 67 ist eine verlängerte Dampfleitung 3 und eine verlängerte Mitteldruckdampfsammelschiene 45 sowie das Vorhandensein von mehr als zwei Dampfturbogruppen angedeutet.

Die Ausführung nach Figur 22 ist auf der Ausführung nach Figur 19 aufgebaut. Der über die Mitteldruckdampfsammelschiene 45 kommende Dampf wird bei dieser Ausführung den jeweiligen Mitteldruckdampfmischapparaten 52, 52', ... in der Dampfleitung 3 unmittelbar vor den mehreren Dampfturbogruppen 2, 2', ... zugeführt.

Mit den Pfeilen 46 und 67 ist eine verlängerte Dampfleitung 3 und eine verlängerte Mitteldruckdampfsammelschiene 45 sowie das Vorhandensein von mehr als zwei Dampfturbogruppen angedeutet.

Bei den Ausführungen nach den Figuren 18 bis 22 könnte der Dampf der Abhitzekessel 32, 32', 32" (analog Figur 23) auch über eine Hochdruckdampfsammelschiene 47 zunächst zusammengefasst und dann auf die Vorschaltdampfturbinen 37, 37', 37" aufgeteilt werden.

Die konkrete Anzahl dieser Dampfturbogruppen 2, 2',... richtet sich nach der Anzahl der im Kraftwerk vorhanden Dampfturbogruppen.

Die Ausführung nach Figur 23 ist auf der Ausführung nach Figur 4 und 18 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Der in den Abhitzekesseln 32, 32', 32" erzeugte Dampf wird über die Frischdampfleitungen 43, 43', 43" einer Hochdruckdampfsammelschiene 47 zugeführt. Diese Hochdruckdampfsammelschiene 47 verläuft bei dieser Ausführung zu zwei Vorschaltdampfturbinen 37, 37' mit den jeweiligen Generatoren 48, 48'. Die Vorschaltdampfturbinen 37, 37' stehen abdampfseitig über die Abdampfleitungen 39, 39' und die Mitteldruckdampfsammelschiene 45 mit dem Mitteldruckdampfmischapparat 52 in Verbindung. Der Mitteldruckdampfmischapparat 52 führt die vom nuklearen Dampferzeugungssystem 1 und der Mitteldruckdampfsammelschiene 45 kommenden Dampfmassenströme zusammen und beaufschlagt damit über die Dampfleitung 3 die Dampfturbogruppe 2.

Im Unterschied zu Figur 23 beaufschlagen in Figur 24 die im Mitteldruckdampfmischapparat 52 zusammengeführten Dampfmassenströme über die Dampfleitung 3 die mehreren Dampfturbogruppen 2, 2', ...

Mit dem Pfeil 46 ist eine verlängerte Dampfleitung 3 und das Vorhandensein von mehr als zwei Dampfturbogruppen angedeutet.

Die Ausführung nach Figur 25 ist auf der Ausführung nach Figur 3 und 23 aufgebaut. Der über die Mitteldruckdampfsammelschiene 45 kommende Dampf wird bei dieser Ausführung einem Niederdruckdampfmischapparat 53 innerhalb der Dampfturbogruppe 2 zugeführt.

Die Ausführung nach Figur 26 ist auf der Ausführung nach Figur 25 aufgebaut. Der über die Mitteldruckdampfsammelschiene 45 kommende Dampf wird bei dieser Ausführung den jeweiligen Niederdruckdampfmischapparaten 53, 53', ... innerhalb der mehreren Dampfturbogruppen 2, 2', ... zugeführt.

Mit den Pfeilen 46 und 67 ist eine verlängerte Dampfleitung 3 und eine verlängerte Mitteldruckdampfsammelschiene 45 sowie das Vorhandensein von mehr als zwei Dampfturbogruppen angedeutet.

Die Ausführung nach Figur 27 ist auf der Ausführung nach Figur 24 aufgebaut. Der über die Mitteldruckdampfsammelschiene 45 kommende Dampf wird bei dieser Ausführung den jeweiligen Mitteldruckdampfmischapparaten 52, 52', ... in der Dampfleitung 3 unmittelbar vor den mehreren Dampfturbogruppen 2, 2', ... zugeführt.

Mit den Pfeilen 46 und 67 ist eine verlängerte Dampfleitung 3 und eine verlängerte Mitteldruckdampfsammelschiene 45 sowie das Vorhandensein von mehr als zwei Dampfturbogruppen angedeutet.

Die konkrete Anzahl dieser Dampfturbogruppen 2, 2', ... richtet sich nach der Anzahl der im Kraftwerk vorhanden Dampfturbogruppen.

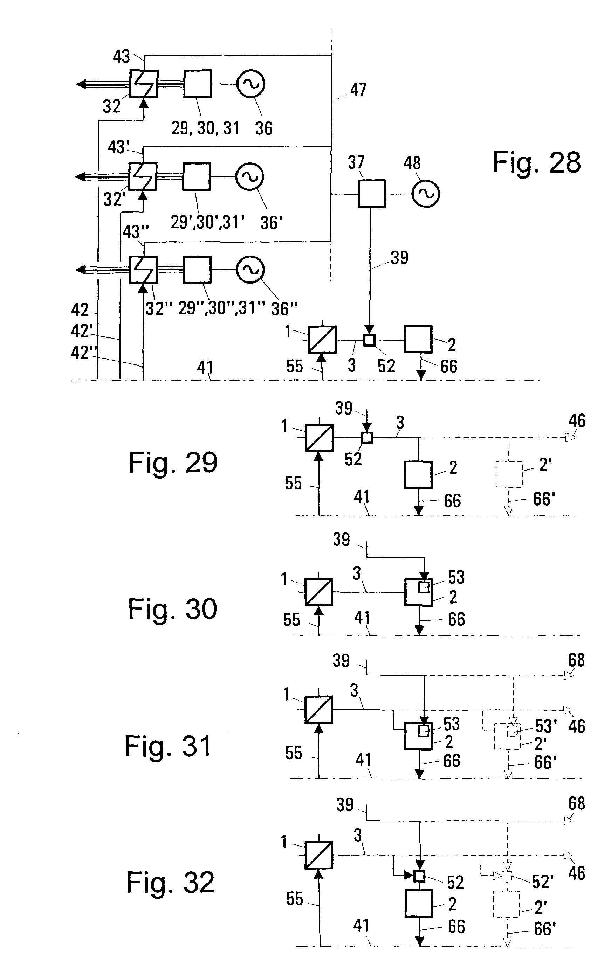

Die Ausführung nach Figur 28 ist auf der Ausführung nach Figur 4 und 18 aufgebaut. Gezeigt sind drei Gasturbosätze 29, 30, 31, 36; 29', 30', 31', 36'; 29", 30", 31", 36" mit den ihnen zugeordneten Abhitzekesseln 32,32',32". Der in den Abhitzekesseln 32, 32', 32" erzeugte Dampf wird über die Frischdampfleitungen 43, 43', 43" einer Hochdruckdampfsammelschiene 47 zugeführt. Diese Hochdruckdampfsammelschiene 47 verläuft bei dieser Ausführung zu einer einzigen Vorschaltdampfturbine 37 mit Generator 48. Abdampfseitig steht die Vorschaltdampfturbine 37 über die Abdampfleitung 39 mit dem Mitteldruckdampfmischapparat 52 in Verbindung. Der Mitteldruckdampfmischapparat 52 führt die vom nuklearen Dampferzeugungssystem 1 und der Abdampfleitung 39 kommenden Dampfmassenströme zusammen und beaufschlagt damit über die Dampfleitung 3 die Dampfturbogruppe 2.

Im Unterschied zu Figur 28 beaufschlagen in Figur 29 die im Mitteldruckdampfmischapparat 52 zusammengeführten Dampfmassenströme über die Dampfleitung 3 die mehreren Dampfturbogruppen 2, 2', ...

Mit dem Pfeil 46 ist eine verlängerte Dampfleitung 3 und das Vorhandensein von mehr als zwei Dampfturbogruppen angedeutet.

Die Ausführung nach Figur 30 ist auf der Ausführung nach Figur 3 und 28 aufgebaut. Der über die Abdampfleitung 39 kommende Dampf wird bei dieser Ausführung einem Niederdruckdampfmischapparat 53 innerhalb der Dampfturbogruppe 2 zugeführt.

Die Ausführung nach Figur 31 ist auf der Ausführung nach Figur 30 aufgebaut. Der über die Abdampfleitung 39 kommende Dampf wird bei dieser Ausführung den jeweiligen Niederdruckdampfmischapparaten 53, 53', ... innerhalb der mehreren Dampfturbogruppen 2, 2', ... zugeführt.

Mit den Pfeilen 46 und 68 ist eine verlängerte Dampfleitung 3 und eine verlängerte Abdampfleitung 39 sowie das Vorhandensein von mehr als zwei Dampfturbogruppen angedeutet.

Die Ausführung nach Figur 32 ist auf der Ausführung nach Figur 29 aufgebaut. Der über die Abdampfleitung 39 kommende Dampf wird bei dieser Ausführung den jeweiligen Mitteldruckdampfmischapparaten 52, 52', ... in der Dampfleitung 3 unmittelbar vor den mehreren Dampfturbogruppen 2, 2', ... zugeführt.

Mit den Pfeilen 46 und 68 ist eine verlängerte Dampfleitung 3 und eine verlängerte Abdampfleitung 39 sowie das Vorhandensein von mehr als zwei Dampfturbogruppen angedeutet.

Die konkrete Anzahl dieser Dampfturbogruppen 2, 2', ... richtet sich nach der Anzahl der im Kraftwerk vorhanden Dampfturbogruppen.

Alternativ können auch drei oder mehr Vorschaltdampfturbinen mit Generator vorhanden sein. Beispielsweise könnte ein nachgerüstetes Kraftwerk sechs Gasturbosätze mit sechs Abhitzekesseln aufweisen, wobei je zwei Abhitzekessel abdampfseitig mit einer Dampfsammelschiene in Verbindung stehen, so dass sechs Gasturbosätze mit drei Vorschaltdampfturbinen mit jeweils einem Generator kombiniert sind. Diese Anordnung könnte beispielsweise gewählt werden, wenn das nachgerüstete Kraftwerk drei Dampfturbogruppen aufweist.

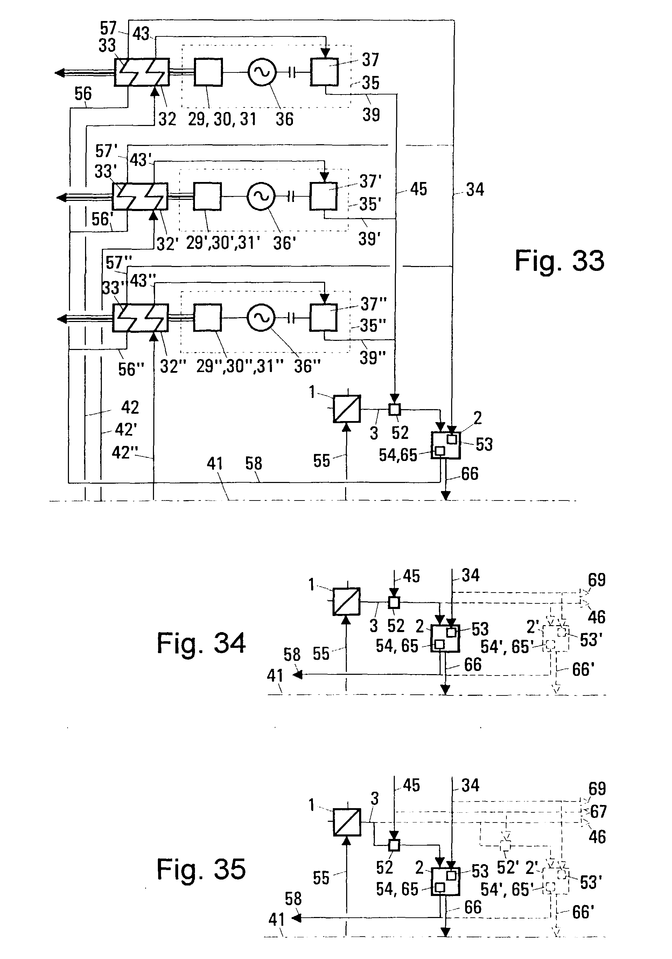

Die Ausführung nach Figur 33 ist auf der Ausführung nach den Figuren 5 und 6 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Die Abhitzekessel 32, 32', 32" weisen Zwischenüberhitzer 33, 33', 33" auf. Der in den Abhitzekesseln 32, 32', 32" erzeugte Dampf wird über die Frischdampfleitungen 43, 43', 43" drei Vorschaltdampfturbinen 37, 37', 37" zugeführt. Die Gasturbosätze 29, 30, 31, 36; 29', 30', 31', 36'; 29", 30", 31", 36" sind mit den Vorschaltdampfturbinen 37, 37', 37" als Einwellenanlagen 35, 35', 35" ausgeführt. Die Vorschaltdampfturbinen 37, 37', 37" stehen abdampfseitig über die Abdampfleitungen 39, 39', 39" mit einer Mitteldruckdampfsammelschiene 45 in Verbindung. Diese Mitteldruckdampfsammelschiene 45 verläuft zum Mitteldruckdampfmischapparat 52. Der Mitteldruckdampfmischapparat 52 führt die vom nuklearen Dampferzeugungssystem 1 und der Mitteldruckdampfsammelschiene 45 kommenden Dampfmassenströme zusammen und beaufschlagt damit über die Dampfleitung 3 die Dampfturbogruppe 2.

Innerhalb der Dampfturbogruppe 2 wird der Dampf über einen Dampfabzweigapparat 54, 65 der Dampfturbogruppe 2 entnommen und über eine kalte Zwischenüberhitzerdampfsammelschiene 58 und die kalten Zwischenüberhitzerleitungen 56, 56', 56" zu den Zwischenüberhitzern 33, 33', 33" der jeweiligen Abhitzekkessel 32, 32', 32" geführt. Nach erfolgter Zwischenüberhitzung kommt der Dampf über die heissen Zwischenüberhitzerleitungen 57, 57', 57", die heisse Zwischenüberhitzerdampfsammelschiene 34 und den Niederdruckdampfmischapparat 53 zur Dampfturbogruppe 2 zurück.

Im Unterschied zu Figur 33 beaufschlagen in Figur 34 die im Mitteldruckdampfmischapparat 52 zusammengeführten Dampfmassenströme über die Dampfleitung 3 und der über die heisse Zwischenüberhitzerdampfsammelschiene 34 kommende Dampfmassenstrom über die Niederdruckdampfmischapparate 53, 53', ... die mehreren Dampfturbogruppen 2, 2', ...

Mit den Pfeilen 46 und 69 ist eine verlängerte Dampfleitung 3 und eine verlängerte heisse Zwischenüberhitzerdampfsammelschiene 34 sowie das Vorhandensein von mehr als zwei Dampfturbogruppen angedeutet.

Ferner werden die Zwischenüberhitzer 33, 33', 33" der Abhitzekessel 32, 32', 32" über die kalte Zwischenüberhitzerdampfsammelschiene 58 ebenfalls aus den Dampfabzweigapparaten 54, 65; 54', 65' der mehreren Dampfturbogruppen 2, 2', ... beaufschlagt.

Die Ausführung nach Figur 35 ist auf der Ausführung nach Figur 34 aufgebaut. Der über die Dampfleitung 3 und die Mitteldruckdampfsammelschiene 45 kommende Dampf wird bei dieser Ausführung den jeweiligen Mitteldruckdampfmischapparaten 52, 52', ... in der Dampfleitung 3 unmittelbar vor den mehreren Dampfturbogruppen 2, 2', ... zugeführt.

Mit den Pfeilen 46, 67 und 69 ist eine verlängerte Dampfleitung 3, eine verlängerte Mitteldruckdampfsammelschiene 45 und eine verlängerte heisse Zwischenüberhitzerdampfsammelschiene 34 sowie das Vorhandensein von mehr als zwei Dampfturbogruppen angedeutet.

Die konkrete Anzahl dieser Dampfturbogruppen 2, 2', ... richtet sich nach der Anzahl der im Kraftwerk vorhanden Dampfturbogruppen.

Bei den Ausführungen nach den Figuren 33 bis 35 könnte der Dampf der Abhitzekessel 32, 32', 32" auch über eine Hochdruckdampfsammelschiene 47 zunächst zusammengefasst und dann auf die Vorschaltdampfturbinen 37, 37', 37" aufgeteilt werden.

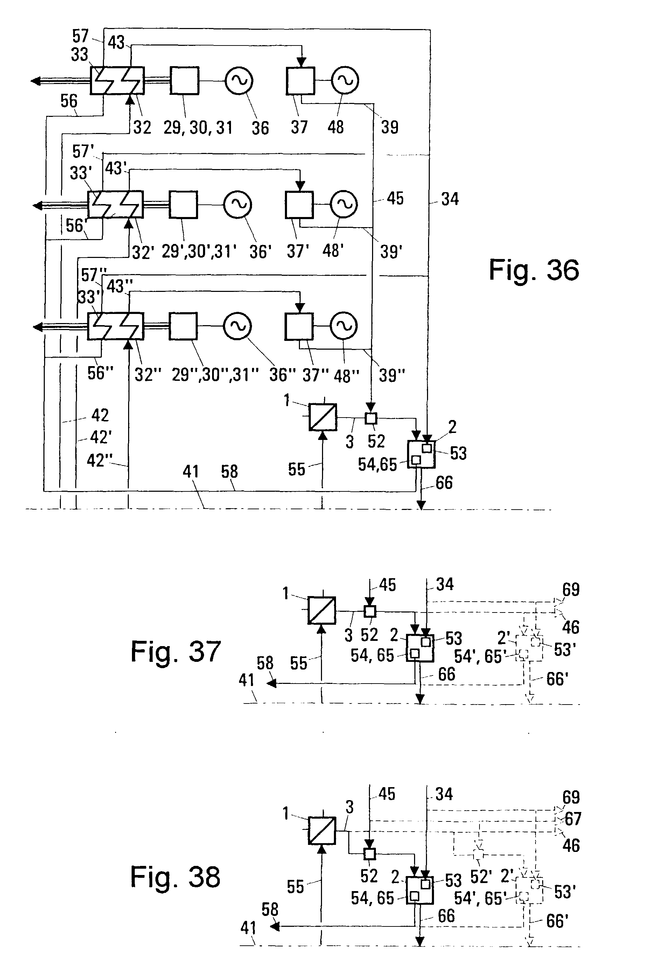

Die Ausführung nach Figur 36 ist auf der Ausführung nach der Figur 33 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Die Abhitzekessel 32, 32', 32" weisen Zwischenüberhitzer 33, 33', 33" auf. Der in den Abhitzekesseln 32, 32', 32" erzeugte Dampf wird über die Frischdampfleitungen 43, 43', 43" drei Vorschaltdampfturbinen 37, 37', 37" zugeführt. Die Vorschaltdampfturbinen 37, 37', 37" sind von den Gasturbosätze 29, 30, 31, 36; 29', 30', 31', 36'; 29", 30", 31", 36" getrennt und mit jeweils einem eigenen Generator 48, 48', 48" gekoppelt. D. h., die Gasturbosätze 29, 30, 31, 36; 29', 30', 31', 36'; 29", 30", 31", 36" und die Vorschaltdampfturbosätze 37, 48; 37', 48'; 37", 48" bilden Mehrwellenanlagen. Die Vorschaltdampfturbinen 37, 37', 37" stehen abdampfseitig über die Abdampfleitungen 39, 39', 39" mit einer Mitteldruckdampfsammelschiene 45 in Verbindung. Diese Mitteldruckdampfsammelschiene 45 verläuft zum Mitteldruckdampfmischapparat 52. Der Mitteldruckdampfmischapparat 52 führt die vom nuklearen Dampferzeugungssystem 1 und der Mitteldruckdampfsammelschiene 45 kommenden Dampfmassenströme zusammen und beaufschlagt damit über die Dampfleitung 3 die Dampfturbogruppe 2.

Innerhalb der Dampfturbogruppe 2 wird der Dampf über einen Dampfabzweigapparat 54, 65 der Dampfturbogruppe 2 entnommen und über eine kalte Zwischenüberhitzerdampfsammelschiene 58 und die kalten Zwischenüberhitzerleitungen 56, 56', 56" zu den Zwischenüberhitzern 33, 33', 33" der jeweiligen Abhitzekkessel 32, 32', 32" geführt. Nach erfolgter Zwischenüberhitzung kommt der Dampf über die heissen Zwischenüberhitzerleitungen 57, 57', 57", die heisse Zwischenüberhitzerdampfsammelschiene 34 und den Niederdruckdampfmischapparat 53 zur Dampfturbogruppe 2 zurück.

Im Unterschied zu Figur 36 beaufschlagen in Figur 37 die im Mitteldruckdampfmischapparat 52 zusammengeführten Dampfmassenströme über die Dampfleitung 3 und der über die heisse Zwischenüberhitzerdampfsammelschiene 34 kommende Dampfmassenstrom über die Niederdruckdampfmischapparate 53, 53', ... die mehreren Dampfturbogruppen 2, 2', ...

Mit den Pfeilen 46 und 69 ist eine verlängerte Dampfleitung 3 und eine verlängerte heisse Zwischenüberhitzerdampfsammelschiene 34 sowie das Vorhandensein von mehr als zwei Dampfturbogruppen angedeutet.

Ferner werden die Zwischenüberhitzer 33, 33', 33" der Abhitzekessel 32, 32', 32" über die kalte Zwischenüberhitzerdampfsammelschiene 58 ebenfalls aus den Dampfabzweigapparaten 54, 65; 54', 65' der mehreren Dampfturbogruppen 2, 2', ... beaufschlagt.

Die Ausführung nach Figur 38 ist auf der Ausführung nach Figur 37 aufgebaut. Der über die Dampfleitung 3 und die Mitteldruckdampfsammelschiene 45 kommende Dampf wird bei dieser Ausführung den jeweiligen Mitteldruckdampfmischapparaten 52, 52', ... in der Dampfleitung 3 unmittelbar vor den mehreren Dampfturbogruppen 2, 2', ... zugeführt.

Mit den Pfeilen 46, 67 und 69 ist eine verlängerte Dampfleitung 3, eine verlängerte Mitteldruckdampfsammelschiene 45 und eine verlängerte heisse Zwischenüberhitzerdampfsammelschiene 34 sowie das Vorhandensein von mehr als zwei Dampfturbogruppen angedeutet.

Die konkrete Anzahl dieser Dampfturbogruppen 2, 2', ... richtet sich nach der Anzahl der im Kraftwerk vorhanden Dampfturbogruppen.

Bei den Ausführungen nach den Figuren 36 bis 38 könnte der Dampf der Abhitzekessel 32, 32', 32" auch über eine Hochdruckdampfsammelschiene 47 zunächst zusammengefasst und dann auf die Vorschaltdampfturbinen 37, 37', 37" aufgeteilt werden.

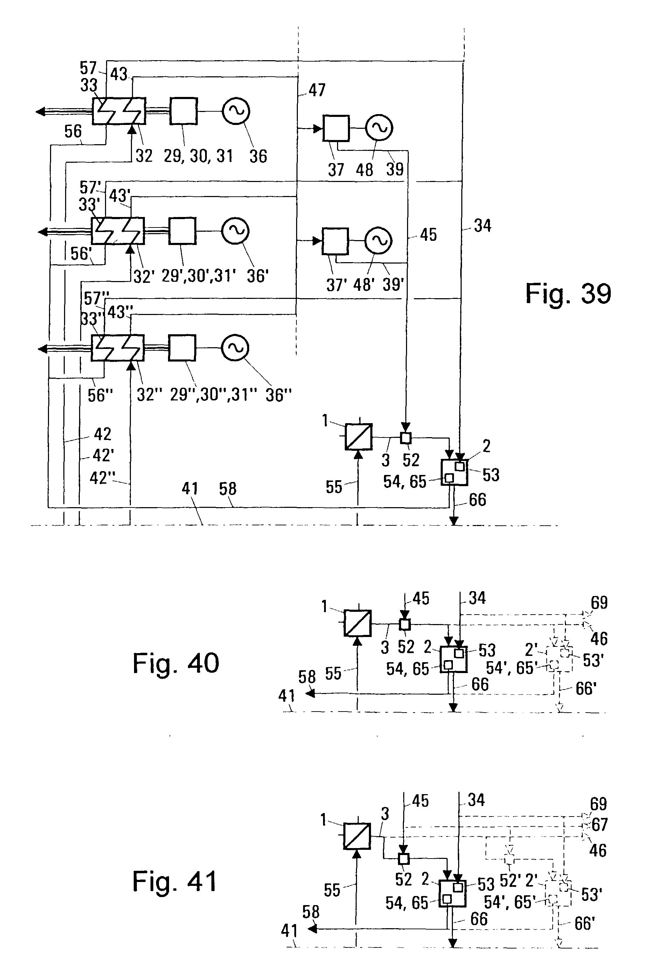

Die Ausführung nach Figur 39 ist auf der Ausführung nach Figur 36 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Die Abhitzekessel 32, 32', 32" weisen Zwischenüberhitzer 33, 33', 33" auf. Der in den Abhitzekesseln 32, 32', 32" erzeugte Dampf wird über die Frischdampfleitungen 43, 43', 43" einer Hochdruckdampfsammelschiene 47 zugeführt. Diese Hochdruckdampfsammelschiene 47 verläuft bei dieser Ausführung zu zwei Vorschaltdampfturbinen 37, 37'. Die Vorschaltdampfturbinen 37, 37' stehen abdampfseitig über die Abdampfleitungen 39, 39' und die Mitteldruckdampfsammelschiene 45 mit dem Mitteldruckdampfmischapparat 52 in Verbindung. Der Mitteldruckdampfmischapparat 52 führt die vom nuklearen Dampferzeugungssystem 1 und der Mitteldruckdampfsammelschiene 45 kommenden Dampfmassenströme zusammen und beaufschlagt damit über die Dampfleitung 3 die Dampfturbogruppe 2.

Innerhalb der Dampfturbogruppe 2 wird der Dampf über einen Dampfabzweigapparat 54, 65 der Dampfturbogruppe 2 entnommen und über eine kalte Zwischenüberhitzerdampfsammelschiene 58 und die kalten Zwischenüberhitzerleitungen 56, 56', 56" zu den Zwischenüberhitzern 33, 33', 33" der jeweiligen Abhitzekkessel 32, 32', 32" geführt. Nach erfolgter Zwischenüberhitzung kommt der Dampf über die heissen Zwischenüberhitzerleitungen 57, 57', 57", die heisse Zwischenüberhitzerdampfsammelschiene 34 und den Niederdruckdampfmischapparat 53 zur Dampfturbogruppe 2 zurück.

Im Unterschied zu Figur 39 beaufschlagen in Figur 40 die im Mitteldruckdampfmischapparat 52 zusammengeführten Dampfmassenströme über die Dampfleitung 3 und der über die heisse Zwischenüberhitzerdampfsammelschiene 34 kommende Dampfmassenstrom über die Niederdruckdampfmischapparate 53, 53', ... die mehreren Dampfturbogruppen 2, 2', ...

Mit den Pfeilen 46 und 69 ist eine verlängerte Dampfleitung 3 und eine verlängerte heisse Zwischenüberhitzerdampfsammelschiene 34 sowie das Vorhandensein von mehr als zwei Dampfturbogruppen angedeutet.

Ferner werden die Zwischenüberhitzer 33, 33', 33" der Abhitzekessel 32, 32', 32" über die kalte Zwischenüberhitzerdampfsammelschiene 58 ebenfalls aus den Dampfabzweigapparaten 54, 65; 54', 65' der mehreren Dampfturbogruppen 2, 2', ... beaufschlagt.

Die Ausführung nach Figur 41 ist auf der Ausführung nach Figur 40 aufgebaut. Der über die Dampfleitung 3 und die Mitteldruckdampfsammelschiene 45 kommende Dampf wird bei dieser Ausführung den jeweiligen Mitteldruckdampfmischapparaten 52, 52', ... in der Dampfleitung 3 unmittelbar vor den mehreren Dampfturbogruppen 2, 2', ... zugeführt.

Mit den Pfeilen 46, 67 und 69 ist eine verlängerte Dampfleitung 3, eine verlängerte Mitteldruckdampfsammelschiene 45 und eine verlängerte heisse Zwischenüberhitzerdampfsammelschiene 34 sowie das Vorhandensein von mehr als zwei Dampfturbogruppen angedeutet.

Die konkrete Anzahl dieser Dampfturbogruppen 2, 2', ... richtet sich nach der Anzahl der im Kraftwerk vorhanden Dampfturbogruppen.

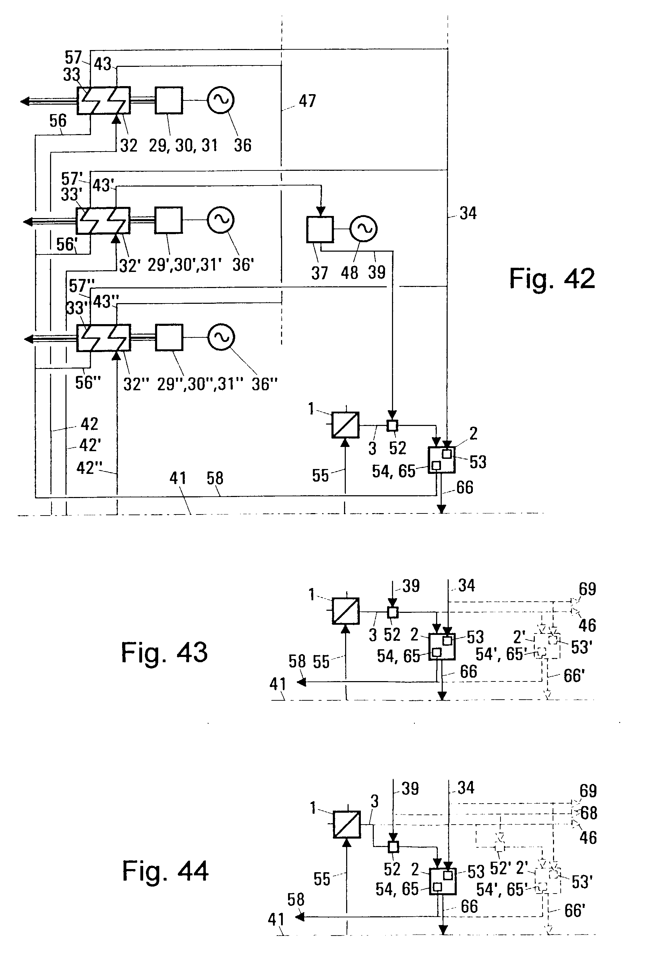

Die Ausführung nach Figur 42 ist auf der Ausführung nach der Figur 39 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Die Abhitzekessel 32, 32', 32" weisen Zwischenüberhitzer 33, 33', 33" auf. Der in den Abhitzekesseln 32, 32', 32" erzeugte Dampf wird über die Frischdampfleitungen 43, 43', 43" einer Hochdruckdampfsammelschien 47 zugeführt. Diese Hochdruckdampfsammelschiene 47 verläuft bei dieser Ausführung zu einer einzigen Vorschaltdampfturbine 37 mit Generator 48. Die Vorschaltdampfturbine 37 steht abdampfseitig über die Abdampfleitung 39 mit dem Mitteldruckdampfmischapparat 52 in Verbindung. Der Mitteldruckdampfmischapparat 52 führt die vom nuklearen Dampferzeugungssystem 1 und der Abdampfleitung 39 kommenden Dampfmassenströme zusammen und beaufschlagt damit über die Dampfleitung 3 die Dampfturbogruppe 2.

Innerhalb der Dampfturbogruppe 2 wird der Dampf über einen Dampfabzweigapparat 54, 65 der Dampfturbogruppe 2 entnommen und über eine kalte Zwischenüberhitzerdampfsammelschiene 58 und die kalten Zwischenüberhitzerleitungen 56, 56', 56" zu den Zwischenüberhitzern 33, 33', 33" der jeweiligen Abhitzekkessel 32, 32', 32" geführt. Nach erfolgter Zwischenüberhitzung kommt der Dampf über die heissen Zwischenüberhitzerleitungen 57, 57', 57", die heisse Zwischenüberhitzerdampfsammelschiene 34 und den Niederdruckdampfmischapparat 53 zur Dampfturbogruppe 2 zurück.

Im Unterschied zu Figur 42 beaufschlagen in Figur 43 die im Mitteldruckdampfmischapparat 52 zusammengeführten Dampfmassenströme über die Dampfleitung 3 und der über die heisse Zwischenüberhitzerdampfsammelschiene 34 kommende Dampfmassenstrom über die Niederdruckdampfmischapparate 53, 53', ... die mehreren Dampfturbogruppen 2 2', ...

Mit den Pfeilen 46 und 69 ist eine verlängerte Dampfleitung 3 und eine verlängerte heisse Zwischenüberhitzerdampfsammelschiene 34 sowie das Vorhandensein von mehr als zwei Dampfturbogruppen angedeutet.

Ferner werden die Zwischenüberhitzer 33, 33', 33" der Abhitzekessel 32, 32', 32" über die kalte Zwischenüberhitzerdampfsammelschiene 58 ebenfalls aus den Dampfabzweigapparaten 54, 65; 54', 65' der mehreren Dampfturbogruppen 2, 2', ... beaufschlagt.

Die Ausführung nach Figur 44 ist auf der Ausführung nach Figur 43 aufgebaut. Der über die Dampfleitung 3 und die Abdampfleitung 39 kommende Dampf wird bei dieser Ausführung den jeweiligen Mitteldruckdampfmischapparaten 52, 52', ... in der Dampfleitung 3 unmittelbar vor den mehreren Dampfturbogruppen 2, 2', ... zugeführt.

Mit den Pfeilen 46, 68 und 69 ist eine verlängerte Dampfleitung 3, eine verlängerte Abdampfleitung 39 und eine verlängerte heisse Zwischenüberhitzerdampfsammelschiene 34 sowie das Vorhandensein von mehr als zwei Dampfturbogruppen angedeutet.

Die konkrete Anzahl dieser Dampfturbogruppen 2, 2', ... richtet sich nach der Anzahl der im Kraftwerk vorhanden Dampfturbogruppen.

Bei einer vollständigen Zwischenüberhitzung des Dampfes zwischen Sattdampfmitteldruckdampfturbine 4 und Niederdruckdampfturbine 8 der Dampfturbogruppe 2 entsprechend den Figuren 7 bis 10 können der Dampfabzweigapparat 54, 65; 54', 65' und der Niederdruckdampfmischapparat 53, 53' in den Figuren 33 bis 44 entfallen.

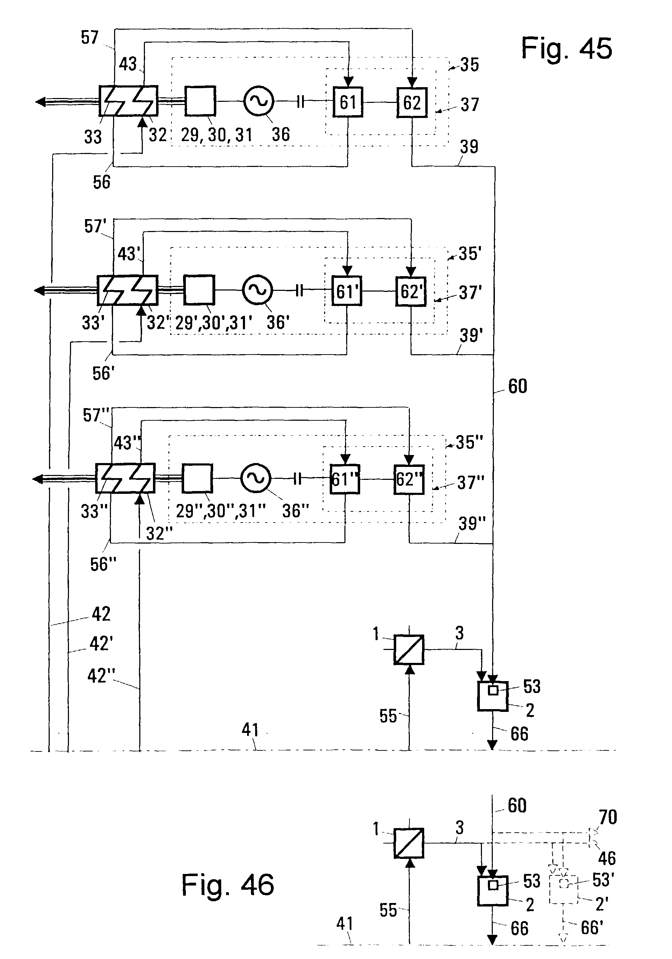

Die Ausführung nach Figur 45 ist auf der Ausführung nach der Figur 11 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Die Abhitzekessel 32, 32', 32" weisen Zwischenüberhitzer 33, 33', 33" auf. Der in den Abhitzekesseln 32, 32', 32" erzeugte Dampf wird über die Frischdampfleitungen 43, 43', 43" den Hochdruckteilen 61, 61', 61" der drei Vorschaltdampfturbinen 37, 37', 37" zugeführt. Die Gasturbosätze 29, 30, 31, 36; 29', 30', 31', 36'; 29", 30", 31", 36" sind mit den Vorschaltdampfturbinen 37, 37', 37" als Einwellenanlagen 35, 35', 35" ausgeführt. Die Hochdruckteile 61, 61', 61" der Vorschaltdampfturbinen 37, 37', 37" stehen abdampfseitig über die kalten Zwischenüberhitzerleitungen 56, 56', 56" mit den Zwischenüberhitzern 33, 33', 33" der Abhitzekessel 32, 32', 32" in Verbindung. Vom Zwischenüberhitzer 33, 33', 33" wird der Dampf über die heissen Zwischenüberhitzerleitungen 57, 57', 57" zu den Mitteldruckteilen 62, 62', 62" der Vorschaltdampfturbinen 37, 37', 37" geführt. Von den Mitteldruckteilen 62, 62', 62" der Vorschaltdampfturbinen 37, 37', 37" wird der Dampf über die Abdampfleitungen 39, 39',39" und die Niederdruckdampfsammelschiene 60 zum Niederdruckdampfmischapparat 53 innerhalb der Dampfturbogruppe 2 geführt.

Im Unterschied zu Figur 45 beaufschlagen in Figur 46 der über die Dampfleitung 3 kommende Dampfmassenstrom und der über die Niederdruckdampfsammelschiene 60 kommende Dampfmassenstrom über die Niederdruckdampfmischapparate 53, 53', ... die mehreren Dampfturbogruppen 2, 2', ...

Mit den Pfeilen 46 und 70 ist eine verlängerte Dampfleitung 3 und eine verlängerte Niederdruckdampfsammelschiene 60 sowie das Vorhandensein von mehr als zwei Dampfturbogruppen angedeutet.

Bei den Ausführungen nach den Figuren 45 und 46 könnte der Dampf der Abhitzekessel 32, 32', 32" auch über eine Hochdruckdampfsammelschiene 47 zunächst zusammengefasst und dann auf die Vorschaltdampfturbinen 37, 37', 37" aufgeteilt werden, ferner könnte der Abdampf der Hochdruckteile 61, 61', 61" der Vorschaltdampfturbinen 37, 37', 37" über eine kalte Zwischenüberhitzerdampfsammelschiene 58 zusammengefasst und dann auf die Zwischenüberhitzer 33, 33', 33" der Abhitzekessel 32, 32', 32" aufgeteilt werden und schliesslich könnte der zwischenüberhitzte Dampf in einer heissen Zwischenüberhitzerdampfsammelschiene 34 zusammengefasst und dann auf die Mitteldruckteil 62, 62', 62" der Vorschaltdampfturbinen 37, 37', 37" aufgeteilt werden.

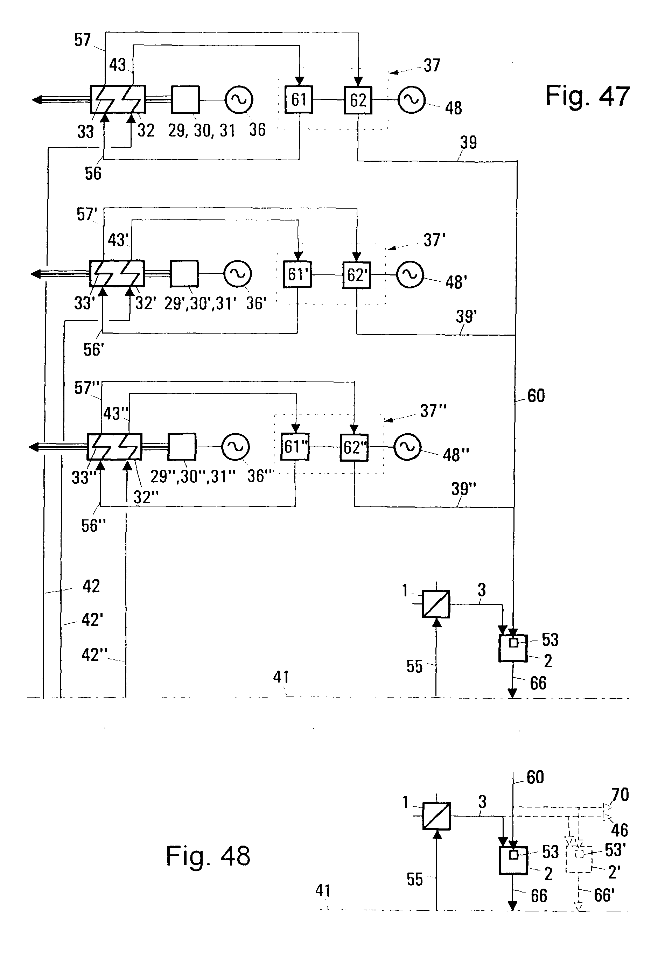

Die Ausführung nach Figur 47 ist auf der Ausführung nach der Figur 45 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Die Abhitzekessel 32, 32', 32" weisen Zwischenüberhitzer 33, 33', 33" auf. Der in den Abhitzekesseln 32, 32', 32" erzeugte Dampf wird über die Frischdampfleitungen 43, 43', 43" den Hochdruckteilen 61, 61', 61" der drei Vorschaltdampfturbinen 37, 37', 37" zugeführt. Die Vorschaltdampfturbinen 37, 37', 37" sind von den Gasturbosätzen 29, 30, 31, 36; 29', 30', 31', 36'; 29", 30", 31", 36" getrennt und mit jeweils einem eigenen Generator 48, 48', 48" gekoppelt. D. h., die Gasturbosätze 29, 30, 31, 36; 29', 30', 31', 36'; 29", 30", 31",36" und die Vorschaltdampfturbosätze 37, 48; 37', 48'; 37", 48" bilden Mehrwellenanlagen. Die Hochdruckteile 61, 61', 61" der Vorschaltdampfturbinen 37, 37', 37" stehen abdampfseitig über die kalten Zwischenüberhitzerleitungen 56, 56', 56" mit den Zwischenüberhitzern 33, 33', 33" der Abhitzekessel 32, 32', 32" in Verbindung. Vom Zwischenüberhitzer 33, 33', 33" wird der Dampf über die heissen Zwischenüberhitzerleitungen 57, 57', 57" zu den Mitteldruckteilen 62, 62', 62" der Vorschaltdampfturbinen 37, 37', 37" geführt. Von den Mitteldruckteilen 62, 62', 62" der Vorschaltdampfturbinen 37, 37', 37" wird der Dampf über die Abdampfleitungen 39, 39', 39" und die Niederdruckdampfsammelschiene 60 zum Niederdruckdampfmischapparat 53 innerhalb der Dampfturbogruppe 2 geführt.

Im Unterschied zu Figur 47 beaufschlagen in Figur 48 der über die Dampfleitung 3 kommende Dampfmassenstrom und der über die Niederdruckdampfsammelschiene 60 kommende Dampfmassenstrom über die Niederdruckdampfmischapparate 53, 53', ... die mehreren Dampfturbogruppen 2, 2', ...

Mit den Pfeilen 46 und 70 ist eine verlängerte Dampfleitung 3 und eine verlängerte Niederdruckdampfsammelschiene 60 sowie das Vorhandensein von mehr als zwei Dampfturbogruppen angedeutet.

Bei den Ausführungen nach den Figuren 47 und 48 könnte der Dampf der Abhitzekessel 32, 32', 32" auch über eine Hochdruckdampfsammelschiene 47 zunächst zusammengefasst und dann auf die Vorschaltdampfturbinen 37, 37', 37" aufgeteilt werden, ferner könnte der Abdampf der Hochdruckteile 61, 61', 61" der Vorschaltdampfturbinen 37, 37', 37" über eine kalte Zwischenüberhitzerdampfsammelschiene 58 zusammengefasst und dann auf die Zwischenüberhitzer 33, 33', 33" der Abhitzekessel 32, 32', 32" aufgeteilt werden und schliesslich könnte der zwischenüberhitzte Dampf in einer heissen Zwischenüberhitzerdampfsammelschiene 34 zusammengefasst und dann auf die Mitteldruckteil 62, 62', 62" der Vorschaltdampfturbinen 37, 37', 37" aufgeteilt werden.

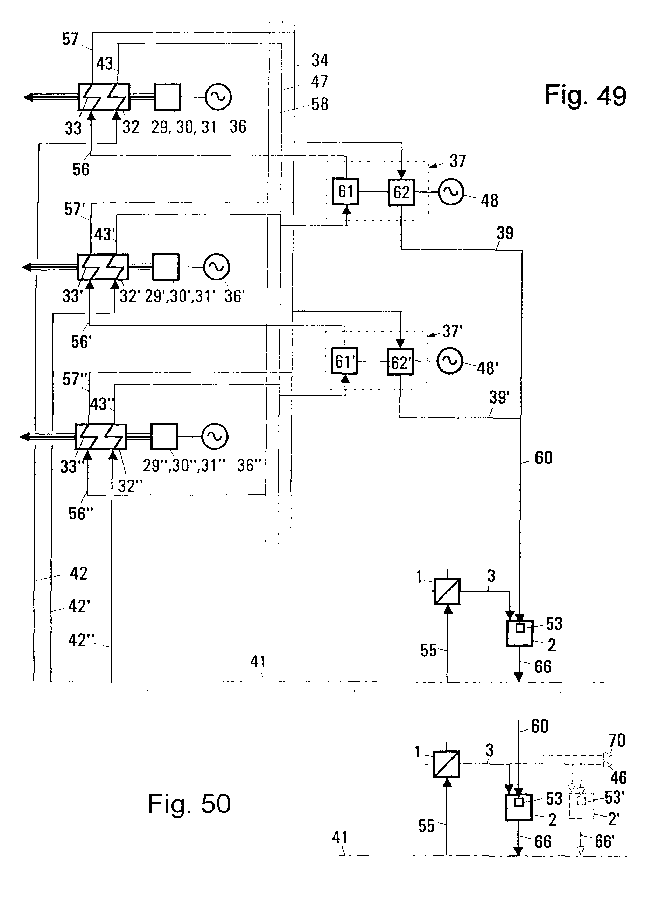

Die Ausführung nach Figur 49 ist auf der Ausführung nach der Figur 47 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Die Abhitzekessel 32, 32', 32" weisen Zwischenüberhitzer 33, 33', 33" auf. Der in den Abhitzekesseln 32, 32', 32" erzeugte Dampf wird über die Frischdampfleitungen 43, 43', 43" und die Hochdruckdampfsammelschiene 47 den zwei Hochdruckteilen 61, 61' der zwei Vorschaltdampfturbinen 37, 37' zugeführt. Die zwei Hochdruckteile 61, 61' der zwei Vorschaltdampfturbinen 37, 37' stehen abdampfseitig über die kalte Zwischenüberhitzerdampfsammelschiene 58 und die kalten Zwischenüberhitzerleitungen 56, 56', 56" mit den Zwischenüberhitzern 33, 33', 33" der Abhitzekessel 32, 32', 32" in Verbindung. Vom Zwischenüberhitzer 33, 33', 33" wird der Dampf über die heissen Zwischenüberhitzerleitungen 57, 57', 57" und die heisse Zwischenüberhitzerdampfsammelschiene 34 zu den zwei Mitteldruckteilen 62, 62' der zwei Vorschaltdampfturbinen 37,3 7' geführt. Von den zwei Mitteldruckteilen 62, 62' der zwei Vorschaltdampfturbinen 37,37' wird der Dampf über die Abdampfleitungen 39, 39' und die Niederdruckdampfsammelschiene 60 zum Niederdruckdampfmischapparat 53 innerhalb der Dampfturbogruppe 2 geführt.

Im Unterschied zu Figur 49 beaufschlagen in Figur 50 der über die Dampfleitung 3 kommende Dampfmassenstrom und der über die Niederdruckdampfsammelschiene 60 kommende Dampfmassenstrom über die Niederdruckdampfmischapparate 53, 53', ... die mehreren Dampfturbogruppen 2, 2', ...

Mit den Pfeilen 46 und 70 ist eine verlängerte Dampfleitung 3 und eine verlängerte Niederdruckdampfsammelschiene 60 sowie das Vorhandensein von mehr als zwei Dampfturbogruppen angedeutet.

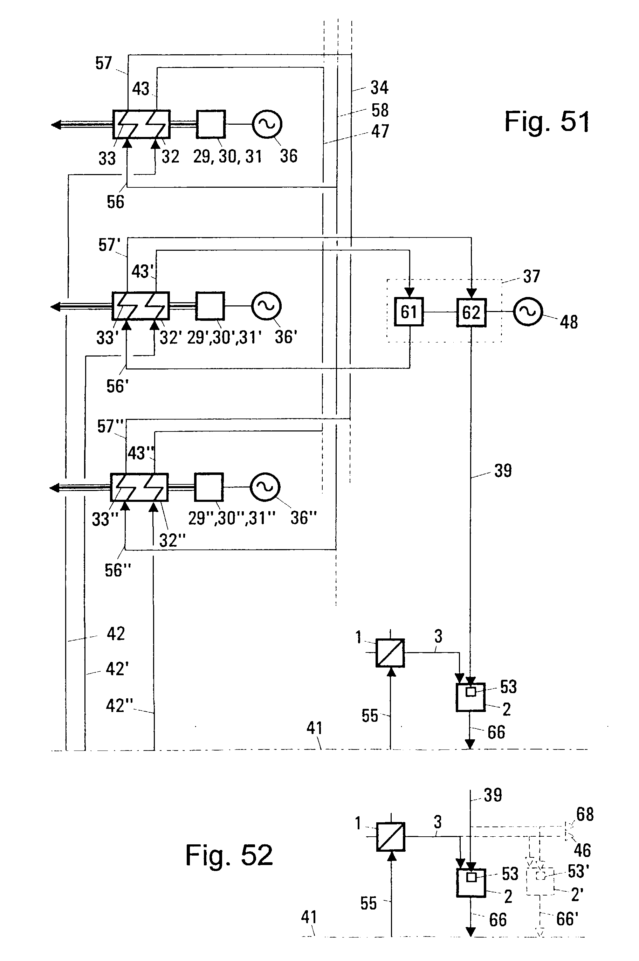

Die Ausführung nach Figur 51 ist auf der Ausführung nach der Figur 49 aufgebaut. Gezeigt sind drei Gasturbosätze 29, 30, 31, 36; 29', 30', 31', 36'; 29", 30", 31", 36" mit den ihnen zugeordneten Abhitzekesseln 32, 32', 32". Die Abhitzekessel 32, 32', 32" weisen Zwischenüberhitzer 33, 33', 33" auf. Der in den Abhitzekesseln 32, 32', 32" erzeugte Dampf wird über die Frischdampfleitungen 43, 43', 43" und die Hochdruckdampfsammelschiene 47 dem Hochdruckteil 61 einer einzigen Vorschaltdampfturbine 37 zugeführt. Das Hochdruckteil 61 der Vorschaltdampfturbine 37 steht abdampfseitig über die kalte zwischenüberhitzerdampfsammelschiene 58 und die kalten Zwischenüberhitzerleitungen 56, 56', 56" mit den Zwischenüberhitzern 33, 33', 33" der Abhitzekessel 32, 32', 32" in Verbindung. Vom Zwischenüberhitzer 33, 33', 33" wird der Dampf über die heissen Zwischenüberhitzerleitungen 57, 57', 57" und die heisse Zwischenüberhitzerdampfsammelschiene 34 zum Mitteldruckteil 62 der einzigen Vorschaltdampfturbine 37 geführt. Vom Mitteldruckteil 62 der einzigen Vorschaltdampfturbine 37 wird der Dampf über die Abdampfleitung 39 zum Niederdruckdampfmischapparat 53 innerhalb der Dampfturbogruppe 2 geführt.

Im Unterschied zu Figur 51 beaufschlagen in Figur 52 der über die Dampfleitung 3 kommende Dampfmassenstrom und der über die Abdampfleitung 39 kommende Dampfmassenstrom über die Niederdruckdampfmischapparate 53, 53', ... die mehreren Dampfturbogruppen 2, 2', ...

Mit den Pfeilen 46 und 68 ist eine verlängerte Dampfleitung 3 und eine verlängerte Abdampfleitung 39 sowie das Vorhandensein von mehr als zwei Dampfturbogruppen angedeutet.

Es ist offensichtlich das eine Vielzahl von Möglichkeiten als Kombination der dargestellten Varianten realisierbar ist. Welche Variante schlussendlich gewählt wird, hängt unter anderem von den vorhandenen Dampfturbogruppen, von ökonomischen Überlegungen und der Struktur des bestehenden Kraftwerkes ab.

Selbstverständlich ist die Erfindung nicht auf die beschriebenen Ausführungsbeispiele beschränkt. Zum Beispiel können anstelle der
- Hochdruckdampfsammelschiene 47,
- Mitteldruckdampfsammelschiene 45,
- heissen Zwischenüberhitzerdampfsammelschiene 34,
- kalten Zwischenüberhitzerdampfsammelschiene 58 oder der
- Niederdruckdampfsammelschiene 60
auch einzelne Dampfleitungen zwischen den jeweiligen Kraftwerkskomponenten vorgesehen werden.

### Bezugszeichenliste

- 1: Sattdampf erzeugendes System (Sattdampfkessel, nukleares Dampferzeugungssystem)
- 2,2': Dampfturbogruppe (bestehend aus 4, 5, 6, 7, 8; 4', 5', 6', 7', 8')
- 3: Dampfleitung
- 4,4': Sattdampfmitteldruckdampfturbine
- 5,5': Überströmleitung
- 6,6': Separator (Feuchteabscheider)
- 7,7': Zwischenüberhitzer (mit strömendem Dampf)
- 8,8': Niederdruckdampfturbine
- 9: Abzweigdampfleitung
- 10,10': Generator
- 11: Kondensator
- 12: Hotwell
- 13: Kondensatpumpe
- 14: Kondensatleitung
- 15: ND-Vorwärmer
- 16: ND-Vorwärmer
- 17: ND-Vorwärmer
- 18,18': Anzapfdampfleitung
- 19,19': Anzapfdampfleitung
- 20,20': Anzapfdampfleitung
- 21: Speisewasserbehälter/Entgaser
- 22: Hochdruckspeisewasserpumpe
- 23: HD-Vorwärmer
- 24: HD-Vorwärmer
- 25: HD-Vorwärmer
- 26,26': Anzapfdampfleitung
- 27,27': Anzapfdampfleitung
- 28,28': Anzapfdampfleitung
- 29,29',29": Kompressor
- 30,30',30": Brennkammer
- 31,31',31": Gasturbine
- 32,32',32": Abhitzekessel
- 33,33',33": Zwischenüberhitzer (des Abhitzekessels 32, 32', 32")
- 34: Heisse Zwischenüberhitzerdampfsammelschiene
- 35,35',35": Einwellenanlage
- 36,36',36": Generator
- 37,37',37": Vorschaltdampfturbine
- 38,38': Abdampfleitung (von 8, 8')
- 39,39',39": Abdampfleitung (von 37, 37', 37")
- 41: Schnittstelle zum Wasser-/Dampf-Kreislauf
- 42,42',42": Speisewasserleitung (für 32, 32', 32")
- 43,43',43": Frischdampfleitung
- 44,44': Anzapfdampfleitung
- 45: Mitteldruckdampfsammelschiene
- 46: Pfeil (der Dampfleitung 3)
- 47: Hochdruckdampfsammelschiene
- 48, 48', 48": Generator (der Vorschaltdampfturbine 37, 37', 37")
- 50,50': Kondensatleitung (von Separator 6, 6')
- 51,51': Kondensatleitung (von Zwischenüberhitzer 7, 7')
- 52,52': Mitteldruckdampfmischapparat
- 53,53': Niederdruckdampfmischapparat
- 54,54': Dampfabzweigapparat
- 55: Speisewasserleitung (für Sattdampf erzeugendes System 1)
- 56,56',56": Kalte Zwischenüberhitzerleitung
- 57,57',57": Heisse Zwischenüberhitzerleitung
- 58: Kalte Zwischenüberhitzerdampfsammelschiene
- 60: Niederdruckdampfsammelschiene
- 61,61',61": Hochdruckteil (Vorschaltdampfturbine 37, 37', 37")
- 62,62',62": Mitteldruckteil (Vorschaltdampfturbine 37, 37', 37")
- 63,63': Anzapfdampfleitungen 26, 27, 28, 44; 26', 27', 28', 44' (von 4, 4')
- 64,64': Anzapfdampfleitungen 18, 19, 20; 18', 19', 20' (von 8, 8')
- 65,65': Dampfabzweigapparat
- 66,66': Leitungen von der Dampfturbogruppe 2, 2' zum Wasser-/Dampf-Kreislauf 38, 50, 51, 18, 19, 20, 26, 27, 28, 44; 38', 50', 51', 18', 19', 20', 26', 27', 28', 44'
- 67: Pfeil (der Mitteldruckdampfsammelschiene 45)
- 68: Pfeil (der Abdampfleitung 39)
- 69: Pfeil (der heissen Zwischenüberhitzerdampfsammelschiene 34)
- 70: Pfeil (der Niederdruckdampfsammelschiene 60)

## Patentansprüche

1. Verfahren zum Nachrüsten einer Dampfkraftanlage mit einem Sattdampf erzeugenden System (1) und mindestens einer von diesem System mit Dampf versorgten Dampfturbogruppe (2, 2'), dadurch gekennzeichnet, dass das Sattdampf erzeugende System (1) mit mindestens einem Gasturbosatz (29, 30, 31, 36; 29', 30', 31', 36'; 29", 30", 31", 36"), mindestens einem Abhitzekessel (32, 32', 32"), mindestens einer Vorschaltdampfturbine (37, 37', 37") und mindestens einem Dampfmischapparat (52, 52'; 53, 53') nachgerüstet wird, das Abgas der mindestens einen Gasturbine (31, 31', 31") des mindestens einen Gasturbosatzes (29, 30, 31, 36; 29', 30', 31', 36'; 29", 30", 31", 36") zur Dampferzeugung im mindestens einen Abhitzekessel (32, 32', 32") genutzt wird, der im mindestens einen Abhitzekessel (32, 32', 32") erzeugte Dampf über eine Frischdampfleitung (43, 43', 43") der mindestens einen Vorschaltdampfturbine (37, 37', 37") zugeführt wird und der Abdampf der mindestens einen Vorschaltdampfturbine (37, 37', 37") über eine Abdampfleitung (39, 39', 39") dem mindestens einen Dampfmischapparat (52, 52'; 53, 53') zugeführt wird, in welchem mindestens einem Dampfmischapparat (52, 52'; 53, 53') vom Sattdampf erzeugenden System (1) stammender Dampf mit von der mindestens einen Vorschaltdampfturbine (37, 37', 37") stammendem Dampf gemischt und das Dampfgemisch der mindestens einen Dampfturbogruppe (2, 2') bereitgestellt wird.

2. Verfahren nach Anspruch 1, wobei die mindestens eine Dampfturbogruppe (2, 2') eine Sattdampfmitteldruckdampfturbine (4, 4'), einen Separator (6,6'), einen Zwischenüberhitzer (7, 7') und eine Niederdruckdampfturbine (8, 8') aufweist, dadurch gekennzeichnet, dass der mindestens eine Abhitzekessel (32, 32', 32") über einen Zwischenüberhitzer (33, 33', 33") verfügt, dass der Abdampf der mindestens einen Sattdampfmitteldruckdampfturbine (4, 4') im Zwischenüberhitzer (33, 33', 33") des mindestens einen Abhitzekessel (32, 32', 32") massenstromseitig mindestens anteilig zwischenüberhitzt wird, und der zwischenüberhitzte Dampf der mindestens einen Dampfturbogruppe (2, 2') bereitgestellt wird.

3. Verfahren nach Anspruch 2, dadurch gekennzeichnet, dass der mindestens eine Dampfmischapparat (52, 52') zwischen dem Sattdampf erzeugenden System (1) und der mindestens einen Sattdampfmitteldruckdampfturbine (4, 4') eingesetzt wird und der mindestens eine Dampfmischapparat (53, 53') zwischen dem Zwischenüberhitzer (7, 7') und der Niederdruckdampfturbine (8, 8') der mindestens einen Dampfturbogruppe (2, 2') eingesetzt wird, dass im mindestens einen Dampfmischapparat (52, 52') vom Sattdampf erzeugenden System (1) zuströmender Dampf mit von der mindestens einen Vorschaltdampfturbine (37, 37', 37") zuströmenden Dampf gemischt wird, und im mindestens einen Dampfmischapparat (53, 53') der im Zwischenüberhitzer (33, 33', 33") des mindestens einen Abhitzekessel (32, 32', 32") zwischenüberhitzte Dampf mit dem vom Zwischenüberhitzer (7, 7') der mindestens einen Dampfturbogruppe (2, 2') zuströmendem Dampf gemischt und dieses Dampfgemisch der mindestens einen Niederdruckdampfturbine (8, 8') bereitgestellt wird.

4. Verfahren nach Anspruch 2, dadurch gekennzeichnet, dass der dem Zwischenüberhitzer (33, 33', 33") des mindestens einen Abhitzekessels (32, 32', 32") zugeführte Dampf zwischen dem Separator (6, 6') und dem Zwischenüberhitzer (7, 7') der mindestens einen Dampfturbogruppe (2, 2') abgezweigt wird.

5. Verfahren nach Anspruch 2, dadurch gekennzeichnet, dass der dem Zwischenüberhitzer (33, 33', 33") des mindestens einen Abhitzekessels (32, 32', 32") zugeführte Dampf zwischen der Sattdampfmitteldruckdampfturbine (4, 4') und dem Separator (6, 6') der mindestens einen Dampfturbogruppe (2, 2') abgezweigt wird.

6. Verfahren nach Anspruch 1, wobei die mindestens eine Dampfturbogruppe (2, 2') eine Sattdampfmitteldruckdampfturbine (4, 4'), einen Separator (6, 6') und eine Niederdruckdampfturbine (8, 8') aufweist, dadurch gekennzeichnet, dass der mindestens eine Abhitzekessel (32, 32', 32") über einen Zwischenüberhitzer (33, 33', 33") verfügt, dass der Abdampf der mindestens einen Sattdampfmitteldruckdampfturbine (4, 4') nach dem Durchströmen des mindestens einen Separators (6, 6') im Zwischenüberhitzer (33, 33', 33") des mindestens einen Abhitzekessel (32, 32', 32") zwischenüberhitzt wird, und der zwischenüberhitzte Dampf der mindestens einen Niederdruckdampfturbine (8, 8') bereitgestellt wird.

7. Verfahren nach Anspruch 1, wobei die mindestens eine Dampfturbogruppe (2, 2') eine Sattdampfmitteldruckdampfturbine (4, 4') und eine Niederdruckdampfturbine (8, 8') aufweist, dadurch gekennzeichnet, dass der mindestens eine Abhitzekessel (32, 32', 32") über einen Zwischenüberhitzer (33, 33', 33") verfügt, dass der Abdampf der mindestens einen Sattdampfmitteldruckdampfturbine (4, 4') im Zwischenüberhitzer (33, 33', 33") des mindestens einen Abhitzekessel (32, 32', 32") zwischenüberhitzt wird, und der zwischenüberhitzte Dampf der mindestens einen Niederdruckdampfturbine (8, 8') bereitgestellt wird.

8. Verfahren nach Anspruch 1, wobei die mindestens eine Vorschaltdampfturbine (37, 37', 37") einen Hochdruckteil (61, 61', 61") und einen Mitteldruckteil (62, 62', 62") aufweist und der mindestens eine Abhitzekessel (32, 32', 32") über einen Zwischenüberhitzer (33, 33', 33") verfügt, dadurch gekennzeichnet, dass der Abdampf des Hochdruckteils (61, 61', 61") der mindestens einen Vorschaltdampfturbine (37, 37', 37") im Zwischenüberhitzer (33, 33', 33") des mindestens einen Abhitzekessels (32, 32', 32") zwischenüberhitzt wird und danach ihrem Mitteldruckteil (62, 62', 62") zugeführt wird und dass der Abdampf des Mitteldruckteils (62, 62', 62") der mindestens einen Vorschaltdampfturbine (37, 37', 37") über eine Abdampfleitung (39, 39', 39") dem mindestens einen Dampfmischapparat (52, 52'; 53, 53') zugeführt wird.

9. Verfahren nach einem der Ansprüche 1, 2, 6, 7 oder 8, dadurch gekennzeichnet, dass der mindestens eine Dampfmischapparat (52, 52') zwischen dem Sattdampf erzeugenden System (1) und der mindestens einen Dampfturbogruppe (2, 2') eingesetzt wird.

10. Verfahren nach Anspruch 1 oder 8, dadurch gekennzeichnet, dass die mindestens eine Dampfturbogruppe (2, 2') eine Niederdruckdampfturbine (8, 8') aufweist und der mindestens eine Dampfmischapparat (53, 53') vor der mindestens einen Niederdruckdampfturbine (8, 8') eingesetzt wird.

11. Nach dem Verfahren nach Anspruch 1 nachgerüstete Dampfkraftanlage mit einem Sattdampf erzeugenden System (1) und mindestens einer von diesem System (1) mit Dampf versorgten Dampfturbogruppe (2, 2'), gekennzeichnet durch mindestens einen Gasturbosatz (29, 30, 31, 36; 29', 30', 31', 36'; 29", 30", 31", 36"), mindestens einen Abhitzekessel (32, 32', 32"), mindestens eine Vorschaltdampfturbine (37 ,37', 37") und mindestens einen Dampfmischapparat (52, 52'; 53,5 3'), welcher Dampfmischapparat (52, 52'; 53, 53') einlassseitig mit dem Sattdampf erzeugenden System (1) und mit der mindestens einen Vorschaltdampfturbine (37, 37', 37") und auslassseitig mit mindestens einem Teil der Dampfturbogruppe (2, 2') kommuniziert.

12. Dampfkraftanlage nach Anspruch 11, dadurch gekennzeichnet, dass der mindestens eine Abhitzekessel (32, 32', 32") einen Zwischenüberhitzer (33, 33', 33") aufweist, die mindestens eine Dampfturbogruppe (2, 2'), eine Sattdampfmitteldruckdampfturbine (4, 4'), einen Separator (6, 6'), einen Zwischenüberhitzer (7, 7') und eine Niederdruckdampfturbine (8, 8') aufweist, mindestens ein Dampfmischapparat (52, 52') zwischen dem Sattdampf erzeugenden System (1) und der mindestens einen Dampfturbogruppe (2, 2') angeordnet ist, der einlassseitig mit dem Sattdampf erzeugenden System (1) und der mindestens einen Vorschaltdampfturbine (37, 37', 37") und auslassseitig mit der mindestens einen Dampfturbogruppe (2, 2') kommuniziert, welche Dampfturbogruppe (2, 2') mit einem Dampfabzweigapparat (54, 54'; 65, 65') ausgerüstet ist, von welchem Dampfabzweigapparat (54, 54'; 65, 65') eine kalte Zwischenüberhitzerdampfleitung (56) zum Zwischenüberhitzer (33, 33', 33") des mindestens einen Abhitzekessels (32, 32', 32") verläuft, und dass zwischen dem Zwischenüberhitzer (7, 7') und der Niederdruckdampfturbine (8, 8') der mindestens einen Dampfturbogruppe (2,2') ein weiterer Dampfmischapparat (53,53') angeordnet ist, der einlassseitig mit dem Zwischenüberhitzer (7,7') der mindestens einen Dampfturbogruppe (2,2') und mit der heissen Zwischenüberhitzerleitung (57,57',57") des Zwischenüberhitzers (33,33',33") des mindestens einen Abhitzekessels (32,32',32") und auslassseitig mit der Niederdruckdampfturbine (8,8') kommuniziert.

13. Dampfkraftanlage nach Anspruch 12, dadurch gekennzeichnet, dass eine kalte Zwischenüberhitzerdampfsammelschiene (58) vom Dampfabzweigapparat (54, 54'; 65, 65') abzweigt, welche über die kalten Zwischenüberhitzerleitungen (56, 56', 56") mit den Zwischenüberhitzern (33, 33', 33") der mindestens zwei Abhitzekessel (32, 32', 32") in Verbindung steht, welche Zwischenüberhitzer (33, 33', 33") über deren heisse Zwischenüberhitzerdampfleitungen (57, 57', 57") mit einer heissen Zwischenüberhitzerdampfsammelschiene (34) in Verbindung stehen, die mit dem mindestens einen Dampfmischapparat (53, 53') kommuniziert.

14. Dampfkraftanlage nach Anspruch 11, dadurch gekennzeichnet, dass der mindestens eine Abhitzekessel (32, 32', 32") einen Zwischenüberhitzer (33, 33', 33") aufweist, die mindestens eine Dampfturbogruppe (2,2') eine Sattdampfmitteldruckdampfturbine (4, 4'), einen Separator (6, 6') und eine Niederdruckdampfturbine (8, 8') aufweist, mindestens ein Dampfmischapparat (52, 52') zwischen dem Sattdampf erzeugenden System (1) und der mindestens einen Dampfturbogruppe (2, 2') angeordnet ist, der einlassseitig mit dem Sattdampf erzeugenden System (1) und der mindestens einen Vorschaltdampfturbine (37, 37', 37") und auslassseitig mit der mindestens einen Dampfturbogruppe (2, 2') kommuniziert, von welchem Separator (6, 6') eine kalte Zwischenüberhitzerdampfleitung (56) zum Zwischenüberhitzer (33, 33', 33") des mindestens einen Abhitzekessels (32, 32', 32") verläuft, von welchem die heisse Zwischenüberhitzerdampfleitung (57) zur mindestens einen Niederdruckdampfturbine (8, 8') verläuft.

15. Dampfkraftanlage nach Anspruch 11, dadurch gekennzeichnet, dass der mindestens eine Abhitzekessel (32,32',32") einen Zwischenüberhitzer (33, 33', 33") aufweist, die mindestens eine Dampfturbogruppe (2, 2') eine Sattdampfmitteldruckdampfturbine (4, 4') und eine Niederdruckdampfturbine (8, 8') aufweist, mindestens ein Dampfmischapparat (52, 52') zwischen dem Sattdampf erzeugenden System (1) und der mindestens einen Dampfturbogruppe (2, 2') angeordnet ist, der einlassseitig mit dem Sattdampf erzeugenden System (1) und der mindestens einen Vorschaltdampfturbine (37, 37', 37") und auslassseitig mit der mindestens einen Dampfturbogruppe (2, 2') kommuniziert, von welcher Sattdampfmitteldruckdampfturbine (4, 4') eine kalte Zwischenüberhitzerdampfleitung (56) zum Zwischenüberhitzer (33, 33', 33") des mindestens einen Abhitzekessels (32, 32', 32") verläuft, von welchem eine heisse Zwischenüberhitzerdampfleitung (57) abgeht, welche zur mindestens einen Niederdruckdampfturbine (8, 8') verläuft.

16. Dampfkraftanlage nach Anspruch 14 oder 15, dadurch gekennzeichnet, dass die von der mindestens einen Dampfturbogruppe (2, 2') verlaufende kalte Zwischenüberhitzerdampfsammelschiene (58) über die kalten Zwischenüberhitzerleitungen (56, 56, 56") mit den Zwischenüberhitzern (33, 33', 33") der mindestens zwei Abhitzekessel (32, 32', 32") in Verbindung steht, welche Zwischenüberhitzer (33, 33', 33") über deren heisse Zwischenüberhitzerdampfleitungen (57, 57', 57") mit einer heissen Zwischenüberhitzerdampfsammelschiene (34) in Verbindung stehen, die mit der mindestens einen Niederdruckdampfturbine (8, 8') kommuniziert.

17. Dampfkraftanlage nach Anspruch 11, dadurch gekennzeichnet, dass der mindestens eine Abhitzekessel (32, 32', 32") einen Zwischenüberhitzer (33, 33', 33") aufweist, dass die mindestens eine Vorschaltdampfturbine (37, 37', 37") einen Hochdruckteil (61, 61', 61") und einen Mitteldruckteil (62, 62', 62") aufweist, wobei der Hochdruckteil (61, 61', 61") abdampfseitig über eine kalte Zwischenüberhitzerdampfleitung (56, 56', 56") mit dem Zwischenüberhitzer (33, 33', 33") des mindestens einen Abhitzekessels (32 32', 32") in Verbindung steht, dessen heisse Zwischenüberhitzerleitung (57, 57', 57") mit dem Mitteldruckteil (62, 62', 62") der mindestens einen Vorschaltdampfturbine (37, 37', 37") in Verbindung steht, dessen Abdampfleitung (39, 39', 39") mit mindestens einem Teil der Dampfturbogruppe (2, 2') kommuniziert.

18. Dampfkraftanlage nach Anspruch 17, dadurch gekennzeichnet, dass der jeweilige Hochdruckteil (61, 61', 61") abdampfseitig mit einer kalten Zwischenüberhitzerdampfsammelschiene (58) in Verbindung steht, welche über die kalten Zwischenüberhitzerleitungen (56, 56', 56") mit den Zwischenüberhitzern (33, 33', 33") der mindestens zwei Abhitzekessel (32, 32', 32") in Verbindung stehen, welche Zwischenüberhitzer (33, 33', 33") über deren heisse Zwischenüberhitzerleitungen (57, 57', 57") mit einer heissen Zwischenüberhitzerdampfsammelschiene (34) in Verbindung stehen, welche mit den jeweiligen Niederdruckteilen (62, 62', 62") in Verbindung steht, deren Abdampfleitungen (39, 39', 39") mit einer Niederdruckdampfsammelschiene (60) in Verbindung stehen, die zum jeweiligen Dampfmischapparat (53, 53') verläuft.

19. Dampfkraftanlage nach einem der Ansprüche 11, 12, 14, 15 oder 17 dadurch gekennzeichnet, dass der mindestens eine Gasturbosatz (29, 30, 31, 36; 29', 30', 31', 36'; 29", 30", 31", 36") mit der mindestens einen Vorschaltdampfturbine (37, 37', 37") als Einwellenanlage ausgebildet ist.

20. Dampfkraftanlage nach einem der Ansprüche 11, 12, 14, 15 oder 17 dadurch gekennzeichnet, dass mindestens ein Gasturbosatz (29, 30, 31, 36; 29', 30', 31', 36'; 29", 30", 31", 36") und mindestens eine mit einem eigenen Generator (48, 48', 48") verbundene Vorschaltdampfturbine (37, 37', 37") vorhanden ist, so dass eine Mehrwellenanlage ausgebildet ist.

21. Dampfkraftanlage nach einem der Ansprüche 11, 14, 15 oder 17 dadurch gekennzeichnet, dass der mindestens eine Dampfmischapparat (52, 52') zwischen dem Sattdampf erzeugenden System (1) und der mindestens einen Dampfturbogruppe (2, 2') angeordnet ist.

22. Dampfkraftanlage nach Anspruch 11 oder 17, dadurch gekennzeichnet, dass die mindestens eine Dampfturbogruppe (2, 2') eine Niederdruckdampfturbine (8, 8') aufweist und der mindestens eine Dampfmischapparat (53, 53') vor der mindestens einen Niederdruckdampfturbine (8, 8') angeordnet ist.

23. Dampfkraftanlage nach einem der Ansprüche 11, 14, 15 oder 17, gekennzeichnet durch mindestens eine Dampfturbogruppe (2, 2'), welche über eine gemeinsame Dampfleitung (3) mit dem mindestens einen Dampfmischapparat (52, 52') in Verbindung steht.

24. Dampfkraftanlage nach einem der Ansprüche 11, 12, 14, 15 oder 17, dadurch gekennzeichnet, dass die mindestens zwei Abhitzekessel (32, 32', 32") über ihre Frischdampfleitungen (43, 43', 43") mit einer Hochdruckdampfsammelschiene (47) in Verbindung stehen, die zu der mindestens einen Vorschaltdampfturbine (37, 37', 37") verläuft.

25. Dampfkraftanlage nach einem der Ansprüche 11, 12, 14, oder 15, dadurch gekennzeichnet, dass die mindestens zwei Vorschaltdampfturbinen (37, 37', 37") über ihre Abdampfleitungen (39, 39', 39") mit einer Mitteldruckdampfsammelschiene (45) in Verbindung stehen, die zu dem mindestens einem Dampfmischapparat (52, 52'; 53, 53') verläuft.
